(19) Europäisches Patentamt
European Patent Office
Office européen des brevets

(11) **EP 1 923 673 B1**

(12) **EUROPÄISCHE PATENTSCHRIFT**

(45) Veröffentlichungstag und Bekanntmachung des Hinweises auf die Patenterteilung:
**25.03.2015 Patentblatt 2015/13**

(51) Int Cl.:
*G01D 5/38* (2006.01)     *G01D 5/245* (2006.01)
*G01D 5/36* (2006.01)     *G01D 5/244* (2006.01)

(21) Anmeldenummer: **07019810.6**

(22) Anmeldetag: **10.10.2007**

(54) **Positionsmesseinrichtung**

Position measuring device

Dispositif de mesure de position

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.11.2006 DE 102006054780**
**27.07.2007 DE 102007035345**

(43) Veröffentlichungstag der Anmeldung:
**21.05.2008 Patentblatt 2008/21**

(73) Patentinhaber: **Dr. Johannes Heidenhain GmbH**
**83301 Traunreut (DE)**

(72) Erfinder:
• **Holzapfel, Wolfgang**
**83119 Obing (DE)**
• **Hermann, Michael**
**83342 Tacherting (DE)**
• **Sändig, Karsten**
**83349 Palling (DE)**

(56) Entgegenhaltungen:
EP-A2- 0 303 008     EP-B1- 0 770 850
WO-A2-03/021194     WO-A2-03/079555
DE-A1- 3 939 504     DE-A1- 4 319 003
DE-A1- 19 921 309     DE-A1-102005 006 247
DE-C2- 3 416 864     DE-C2- 4 030 049
JP-A- 61 182 523     US-A- 5 981 941

**Beschreibung**

Die vorliegende Erfindung betrifft eine Positionsmesseinrichtung.

Bekannte Positionsmesseinrichtungen liefern neben periodischen Inkrementalsignalen bzgl. des Relativversatzes zweier zueinander beweglicher Objekte auch sogenannte Referenzimpulssignale. Über die Referenzimpulssignale kann an bestimmten vorgegebenen Referenzpositionen entlang der Messstrecke ein exakter Absolutbezug bzgl. der Position der beiden zueinander beweglichen Objekte hergestellt werden. Auf die derart bestimmte Absolutposition kann dann die üblicherweise deutlich höher auflösende Inkrementalmessung nachfolgend bezogen werden.

Zur Erzeugung von Referenzimpulssignalen sind nunmehr bereits mehrere Anordnungsmöglichkeiten für Referenzmarkierungen auf der von der Abtasteinheit abgetasteten Maßverkörperung bekannt geworden.

So sieht eine übliche Anordnungsvariante vor, ein oder mehrere Referenzmarkierungen seitlich benachbart zur abgetasteten Inkrementalteilungsspur anzuordnen; hierzu sei etwa auf die EP 194 611 A2 verwiesen. Problematisch an einer derartigen Anordnung erweist sich jedoch, dass im Fall der unerwünschten Verdrehung von Abtasteinheit und Maßverkörperung um eine Achse senkrecht zur Maßverkörperungsebene ("Moire-Verdrehung") eine Verschiebung der Position des erzeugten Referenzimpulssignals bzgl. des Inkrementalsignals resultiert. Eine fehlerhafte Positionsbestimmung ist die Folge.

Es wurden daher, wie z.B. in der EP 303 008 A2, auch schon Anordnungsvarianten vorgeschlagen, bei der zwei Inkrementalteilungsspuren beidseitig benachbart zu einer Referenzmarkierung auf der Maßverkörperung angeordnet werden. Die beiden Inkrementalteilungsspuren sind hierbei zueinander um einen Teilbetrag der Teilungsperiode zueinander versetzt angeordnet, so dass aus deren getrennter Abtastung über jeweils separate Abtastmittel zwei um 90° phasenversetzte Inkrementalsignale erzeugbar sind. Während sich durch diese Anordnungsvariante zwar eine Fehler-Minimierung bzgl. eventueller Moiré-Verdrehungen erzielen lässt, erweist sich die vorgeschlagene Abtastung der Inkrementalteilungsspuren insbesondere für hochauflösende Positionsmessungen noch nicht als optimal. So erfordert diese Lösung aufgrund der separaten Abtastung der Inkrementalteilungsspuren einen relativ großen Aufwand; hinzu kommt, dass im Fall der Verschmutzung einer der beiden Inkrementalteilungsspuren Fehlmessungen resultieren können.

Aus der DE 197 48 802 A1 ist ferner eine hochauflösende Positionsmesseinrichtung bekannt, bei der seitlich benachbart zu einer Inkrementalteilungsspur Referenzmarkierungen in Form von in Messrichtung entgegengesetzt gechirpten Teilungsstrukturen angeordnet sind; ähnliche maßverkörperungsseitige Anordnungsvarianten sind auch aus den Druckschriften DE 199 21 309 A1 oder DE 40 21 010 A1 bekannt.

Aufgabe der vorliegenden Erfindung ist es, eine Positionsmesseinrichtung anzugeben, die zur Erzeugung von hochauflösenden Inkrementalsignalen wie auch zur Erzeugung von Referenzimpulssignalen an mindestens einer Referenzposition geeignet ist und die möglichst gering durch eventuelle Moire-Verdrehungen von Maßverkörperung und Abtasteinheit beeinflusst wird.

Diese Aufgabe wird durch eine erste Positionsmesseinrichtung mit den Merkmalen des Anspruchs 1 gelöst.

Vorteilhafte Ausführungsformen der ersten Positionsmesseinrichtung ergeben sich aus den Maßnahmen, die in den von Anspruch 1 abhängigen Ansprüchen aufgeführt sind.

Eine erste erfindungsgemäße Positionsmesseinrichtung zur Erzeugung von Inkrementalsignalen und einem Referenzimpulssignal an mindestens einer Referenzposition umfasst nunmehr eine Abtasteinheit sowie eine hierzu in mindestens einer Messrichtung bewegliche Maßverkörperung. Die Maßverkörperung umfasst zwei sich parallel in Messrichtung erstreckende Inkrementalteilungsspuren mit periodischen Inkrementalteilungen zwischen denen eine Referenzmarkierungsspur angeordnet ist, die an mindestens einer Referenzposition eine Referenzmarkierung aufweist. Die Abtasteinheit umfasst erste Abtastmittel zur Erzeugung des Referenzimpulssignals und zweite Abtastmittel zur Erzeugung der Inkrementalsignale, wobei zur Erzeugung der Inkrementalsignale jede der Inkrementalteilungen von einem Abtast-Strahlenbündel mindestens einmal in einem Inkrementalsignal-Abtastfeld beaufschlagt wird.

Die erfindungsgemäße Ausgestaltung der ersten Positionsmesseinrichtung gewährleistet nunmehr, dass auch bei einer eventuellen Moire-Verdrehung von Maßverkörperung und Abtasteinheit keine Fehler bei der Positionsbestimmung resultieren. Es ist stets eine korrekte Zuordnung des erzeugten Referenzimpulssignales zur gewünschten Inkrementalsignalperiode sichergestellt, da die Inkrementalteilungsspuren und die Referenzmarkierungsspur die gleiche sog. neutrale Moiré-Achse besitzen, um die eine eventuelle Verdrehung von Maßverkörperung und Abtasteinheit keine Fehlmessung verursacht.

Als weiterer Vorteil der erfindungsgemäßen Lösung ist anzuführen, dass auch im Fall starker Moiré-Verdrehungen von Maßverkörperung und Abtasteinheit relativ stabile Inkrementalsignal-Amplituden resultieren. Dies ist insbesondere bei der Weiterverarbeitung der Inkrementalsignale, z.B. einer eventuellen Interpolation derselben, von Bedeutung.

Vorzugsweise weist die erste erfindungsgemäße Positionsmesseinrichtung eine Referenzmarkierung mit mehreren Strukturelementen aufweist, die spiegelsymmetrisch zu einer Symmetrieachse angeordnet sind, die senkrecht zur Messrichtung in der Maßverkörperungsebene orientiert ist.

Die Strukturelemente der Referenzmarkierung sind mit Vorteil spiegelsymmetrisch zu einer Symmetrieachse (Sx) angeordnet, die sich parallel zur Messrichtung (x) in der Maßverkörperungsebene erstreckt.

Über die ersten Abtastmittel in der Abtasteinheit zur Erzeugung des Referenzimpulssignals wird die Referenzmarkierung auf der Maßverkörperung vorzugsweise einmal in einem Referenzimpuls-Abtastfeld beaufschlagt.

Hierbei liegen die Zentren der beiden Inkrementalsignal-Abtastfelder und das Zentrum des Referenzimpuls-Abtastfelds beispielsweise auf einer Geraden in der Maßverkörperungsebene, die senkrecht zur Messrichtung orientiert ist.

Alternativ hierzu liegen wobei die Zentren der beiden Inkrementalsignal-Abtastfelder auf einer Geraden in der Maßverkörperungsebene, die senkrecht zur Messrichtung orientiert ist und das Zentrum des Referenzimpuls-Abtastfelds ist in Messrichtung versetzt zu dieser Geraden auf der Maßverkörperung angeordnet.

Vorzugsweise weist die Referenzmarkierung an der Referenzposition

- mindestens einen Satz erster Strukturelemente auf, die in der Ebene der Maßverkörperung senkrecht zur Messrichtung periodisch mit einer ersten Transversalperiodizität angeordnet sind und
- weist mindestens einen Satz zweiter Strukturelemente auf, die in der Ebene der Maßverkörperung senkrecht zur Messrichtung periodisch mit einer zweiten Transversalperiodizität angeordnet sind, wobei sich die erste und die zweite Transversalperiodizität voneinander unterscheiden und
- es sind die Strukturelemente als diffraktive Strukturelemente ausgebildet, die in der Messrichtung optisch wie eine Zylinderlinse mit einer bestimmten Brennweite wirken und senkrecht zur Messrichtung wie ein Ablenkgitter mit der ersten oder zweiten Transversalperiodizität wirken und
- die Strukturelemente besitzen in Messrichtung einen virtuellen oder reellen Brennpunkt im Brennweiten-Abstand f von der Reflexions-Maßverkörperung.

Mit Vorteil umfassen die ersten Abtastmittel in der Abtasteinheit zur Erzeugung des Referenzimpulssignals

- mehrere optische Elemente, worunter mindestens eine Abbildungsoptik, sowie mindestens zwei in einer Blendenebene angeordnete Blendenstrukturen mit jeweils mehreren Blendenöffnungen sind sowie
- mindestens zwei Referenzimpuls-Detektorelemente.

Hierbei ist die Abbildungsoptik in der Abtasteinheit derart dimensioniert, dass darüber eine Abbildung der bildseitigen Brennebene der Strukturelemente in die Blendenebene resultiert, wobei die positionsmäßige Anordnung der Blendenöffnungen der beiden Blendenstrukturen in Messrichtung auf die Anordnung der Strukturelemente der Referenzmarkierung abgestimmt ist.

Mit Vorteil umfasst die Abtasteinheit ferner eine Abtastplatte, auf der die Blendenstrukturen und die Abbildungsoptik angeordnet sind.

Beispielsweise umfassen ferner die zweiten Abtastmittel in der Abtasteinheit zur Erzeugung der Inkrementalsignale

- mehrere optische Elemente, worunter mehrere Abtastgitter, mindestens ein Vereinigungsgitter sowie mindestens zwei Reflektorelemente sind, über die eine Rückreflexion der aus einem ersten Inkrementalsignal-Abtastfeld kommenden Strahlenbündel in ein zweites Inkrementalsignal-Abtastfeld erfolgt und
- mehrere Inkrementalsignal-Detektorelemente .

Hierbei umfasst die die Abtasteinheit eine Abtastplatte, auf der die Abtastgitter, das Vereinigungsgitter sowie die Reflektorelemente angeordnet sind.

Vorzugsweise ist der Abtasteinheit ferner eine Lichtquelle zugeordnet, die die ersten und zweiten Abtastmittel mit Licht zur Abtastung der Inkrementalteilungen und der Referenzmarkierung versorgt und die Abtasteinheit umfasst ferner ein Aufspaltgitter, welches das von der Lichtquelle kommende Strahlenbündel in ein erstes Teilstrahlenbündel für die ersten Abtastmittel zur Referenzimpulssignalerzeugung und ein zweites Teilstrahlenbündel für die zweiten Abtastmittel zur Inkrementalsignalerzeugung aufspaltet.

Hierbei ist das Aufspaltgitter derart ausgebildet, dass eine konvergente Beleuchtung der Referenzmarkierung auf der Reflexions-Maßverkörperung resultiert.

Das Aufspaltgitter kann auf der Seite der Abtastplatte angeordnet sein, die der Maßverkörperung zugewandt ist.

Eine zweite Positionsmesseinrichtung zur Erzeugung von Inkrementalsignalen und einem Referenzimpulssignal an mindestens einer Referenzposition umfasst nunmehr eine Abtasteinheit sowie eine hierzu in mindestens einer Messrichtung bewegliche Maßverkörperung. Die Maßverkörperung umfasst zwei sich parallel in Messrichtung erstreckende Referenzmarkierungsspuren, die jeweils an mindestens einer Referenzposition eine Referenzmarkierung aufweisen, die symmetrisch bzgl. einer Symmetrieachse in Messrichtung ausgebildet sind. Zwischen den Referenzmarkierungsspuren ist eine Inkrementalteilungsspur mit einer periodischen Inkrementalteilung angeordnet. Die Abtasteinheit umfasst erste Abtastmittel zur Erzeugung des Referenzimpulssignals, wobei zur Erzeugung des Referenzimpulssignals die Referenzmarkierungen in den Referenzmarkierungsspuren von einem Abtast-Strahlenbündel jeweils mindestens einmal in einem Referenzimpulssignal-Abtastfeld beaufschlagt werden. Ferner sind zweite Abtastmittel in der Abtasteinheit zur Erzeugung der Inkrementalsignale vorgesehen, wobei zur Erzeugung der Inkrementalsignale die Inkrementalteilung von einem Abtast-Strahlenbündel in zwei Inkrementalsignal-Abtastfeldern jeweils mindestens einmal beaufschlagt wird.

Die Ausgestaltung der zweiten Positionsmesseinrichtung gewährleistet wie auch bereits die erste Positionsmesseinrichtung, dass damit ein Referenzimpulssignal mit einer Breite erzeugt werden kann, die der Breite der Inkrementalsignale entspricht. Damit ist eine höhere Zuverlässigkeit der Positionsmesseinrichtungen verbunden.

In der zweiten Positionsmesseinrichtung sind die Referenzmarkierungen vorzugsweise spiegelsymmetrisch zu einer Symmetrieachse ausgebildet, die senkrecht zur Messrichtung in der Maßverkörperungsebene orientiert ist.

Hierbei können die Zentren der beiden Inkrementalsignal-Abtastfelder auf einer ersten Geraden in der Maßverkörperungsebene liegen, die senkrecht zur Messrichtung orientiert ist und die Zentren der Referenzimpuls-Abtastfelder auf einer zweiten Geraden in der Maßverkörperungsebene, die senkrecht zur Messrichtung orientiert ist, wobei die beiden Geraden in Messrichtung versetzt zueinander auf der Maßverkörperung angeordnet sind.

Mit Vorteil sind in der zweiten Positionsmesseinrichtung die Referenzmarkierungen jeweils als Zylinderlinsen auf der Maßverkörperung ausgebildet, die eine Transversalperiodizität besitzen, so dass die beiden ersten Beugungsordnungen räumlich getrennt vom beleuchtenden Abtast-Strahlenbündel auf eine Abtastplatte in der Abtasteinheit treffen.

In der zweiten Positionsmesseinrichtung umfassen die ersten Abtastmittel in der Abtasteinheit zur Erzeugung des Referenzimpulssignals vorzugsweise mehrere optische Elemente, worunter mehrere Abtastgitter und Reflektorelemente sind, über die eine Rückreflexion der aus einem ersten Referenzimpuls-Abtastfeld der ersten Referenzmarkierungsspur kommenden Strahlenbündel in ein zweites Referenzimpuls-Abtastfeld der zweiten Referenzmarkierungsspur erfolgt. Ferner umfassen die ersten Abtastmittel ein oder mehrere Referenzimpuls-Detektorelemente.

Hierbei kann die Abtasteinheit eine Abtastplatte umfassen, auf deren der Maßverkörperung zugewandten Seite mehrere diffraktive Abtastgitter angeordnet sind und auf deren entgegengesetzter Seite ein retroreflektierendes Dachkantprisma angeordnet ist, das mehrere verspiegelte Flächen als Reflektorelemente aufweist.

In der zweiten Positionsmesseinrichtung umfassen die zweiten Abtastmittel in der Abtasteinheit zur Erzeugung der Inkrementalsignale vorzugsweise mehrere optische Elemente, worunter mehrere Abtastgitter, ein optionales Vereinigungsgitter sowie mindestens zwei Reflektorelemente sind. Ferner umfassen die zweiten Abtastmittel mehrere Inkrementalsignal-Detektorelemente.

Hierbei erfolgt über die Reflektorelemente vorzugsweise eine Rückreflexion der aus einem ersten Inkrementalsignal-Abtastfeld kommenden Strahlenbündel in ein zweites Inkrementalsignal-Abtastfeld.

In der zweiten Positionsmesseinrichtung umfasst ferner vorzugsweise die Abtasteinheit eine Abtastplatte, auf deren der Maßverkörperung zugewandten Seite mehrere diffraktive Abtastgitter sowie ein optionales Vereinigungsgitter angeordnet sind und auf deren entgegengesetzter Seite ein retroreflektierendes Dachkantprisma angeordnet ist, das mehrere verspiegelte Flächen als Reflektorelemente aufweist.

Mit Vorteil ist hierbei der Abtasteinheit ferner eine Lichtquelle zugeordnet, die die ersten und zweiten Abtastmittel mit Licht zur Abtastung der Inkrementalteilung und der Referenzmarkierungen versorgt.

Weitere Einzelheiten und Vorteile der vorliegenden Erfindung seien anhand der nachfolgenden Beschreibung von Ausführungsbeispielen erfindungsgemäßer Positionsmesseinrichtungen in Verbindung mit den Figuren erläutert.

Es zeigt hierbei:

Figur 1a      eine erste Ansicht von Teil-Abtaststrahlengängen einer ersten erfindungsgemäßen Positionsmesseinrichtung zur Erläuterung der Referenzimpulssignalerzeugung;

Figur 1b      eine zweite Ansicht von Teil-Abtaststrahlengängen der ersten erfindungsgemäßen Positionsmesseinrichtung zur Erläuterung der Referenzimpulssignalerzeugung;

Figur 1c      eine dritte Ansicht von Teil-Abtaststrahlengängen der ersten erfindungsgemäßen Positionsmesseinrichtung zur Erläuterung der Inkrementalsignalerzeugung;

Figur 2a      eine Teil-Draufsicht auf die Reflexions-Maßverkörperung der ersten erfindungsgemäßen Positionsmesseinrichtung inclusive einer Ausschnittsvergrößerung der Referenzmarkierung;

Figur 2b      eine Teil-Draufsicht auf die Reflexions-Maßverkörperung der ersten erfindungsgemäßen Positionsmesseinrichtung inclusive den Abtastfeldern in der Referenzmarkierungsspur und in den Inkrementalteilungsspuren;

Figur 2c     eine Teil-Draufsicht auf die Reflexions-Maßverkörperung einer Abwandlung der ersten erfindungsgemäßen Positionsmesseinrichtung inclusive den Abtastfeldern in der Referenzmarkierungsspur und in den Inkrementalteilungsspuren;

Figur 3a     eine Draufsicht auf die Unterseite der Abtastplatte der ersten erfindungsgemäßen Positionsmesseinrichtung;

Figur 3b     eine Draufsicht auf die Oberseite der Abtastplatte der ersten erfindungsgemäßen Positionsmesseinrichtung;

Figur 4a     eine Darstellung der resultierenden Signale zur Referenzimpulserzeugung mit der ersten erfindungsgemäßen Positionsmesseinrichtung;

Figur 4b     eine Darstellung der Summen- und Differenzsignale, die aus den Signalen gemäß Fig. 4a gebildet werden, inclusive der zur Referenzimpulssignal-Erzeugung genutzten Triggerschwellen;

Figur 4c     eine Darstellung des resultierenden ReferenzimpulsSignals an der Referenzposition inclusive einer Darstellung der Inkrementalsignale;

Figur 5     eine schematisierte Darstellung einer geeigneten Schaltungsanordnung zur Verarbeitung der verschiedenen Signale und zur Erzeugung des Referenzimpulssignals gemäß den Figuren 4a - 4c;

Figur 6a - 6c     verschiedene Darstellungen analog zu Figur 1b mit unterschiedlichen Positionen des neutralen Drehpunkts bzw. mit verkippter Reflexions-Maßverkörperung;

Figur 7a     eine erste Ansicht von Teil-Abtaststrahlengängen einer Variante der ersten erfindungsgemäßen Positionsmesseinrichtung zur Erläuterung der Referenzimpulssignalerzeugung;

Figur 7b     eine zweite Ansicht von Teil-Abtaststrahlengängen der Variante der ersten erfindungsgemäßen Positionsmesseinrichtung aus Fig. 7a zur Erläuterung der Referenzimpulssignalerzeugung;

Figur 8a     eine Draufsicht auf die Unterseite der Abtastplatte der Variante der ersten erfindungsgemäßen Positionsmesseinrichtung;

Figur 8b     eine Draufsicht auf die Oberseite der Abtastplatte der Variante der ersten der erfindungsgemäßen Positionsmesseinrichtung;

Figur 9a     eine erste Ansicht von Teil-Abtaststrahlengängen einer zweiten Positionsmesseinrichtung zur Erläuterung der Signalerzeugung;

Figur 9b     eine zweite Ansicht von Teil-Abtaststrahlengängen der zweiten Positionsmesseinrichtung zur Erläuterung der Signalerzeugung;

Figur 10     eine Teil-Draufsicht auf die Reflexions-Maßverkörperung der zweiten Positionsmesseinrichtung inclusive den Abtastfeldern in den Referenzmarkierungsspuren und in der Inkrementalteilungsspur;

Figur 11     eine Draufsicht auf die Unterseite der Abtastplatte der zweiten Positionsmesseinrichtung.

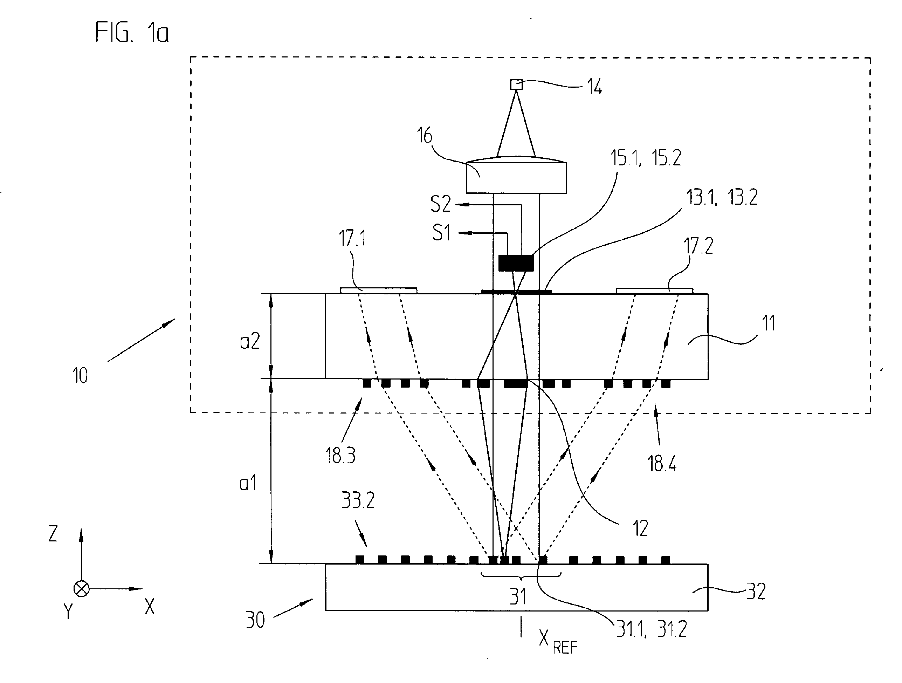

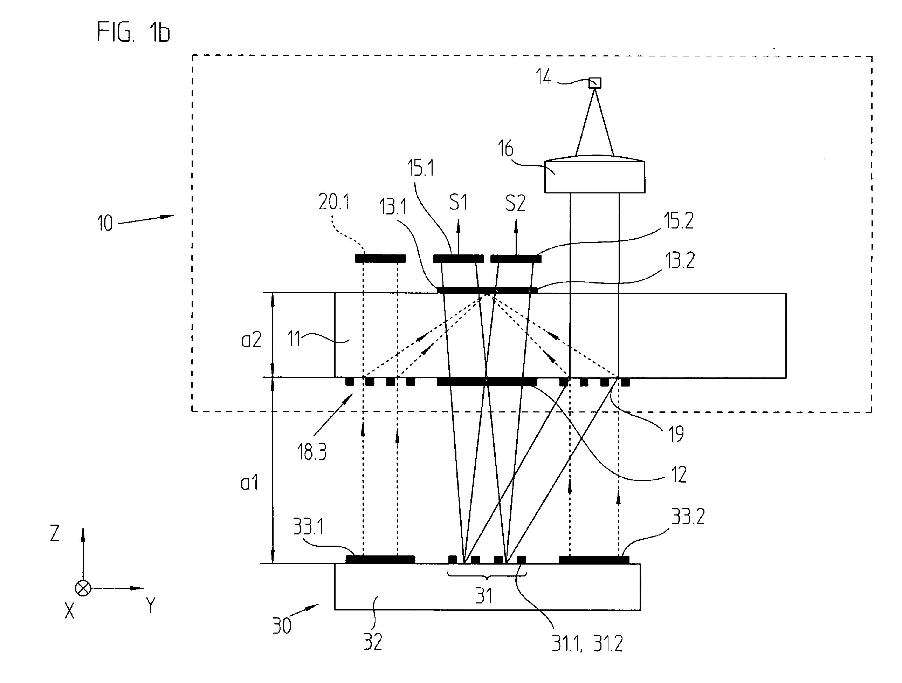

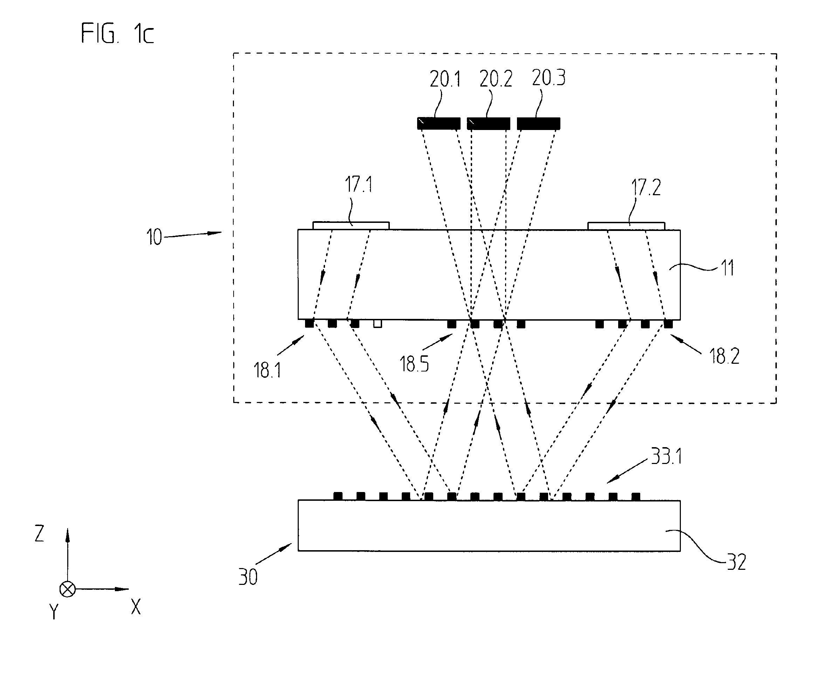

Anhand der Figuren 1 - 8b sei nachfolgend eine erste erfindungsgemäße Positionsmesseinrichtung und insbesondere die Erzeugung eines Referenzimpulssignales RI mit derselbigen erläutert.

Die Figuren 1a und 1b zeigen in stark schematisierter Form Teil-Abtaststrahlengänge zur Referenzimpulssignalerzeugung in einer ersten erfindungsgemäßen Positionsmesseinrichtung in verschiedenen Ansichten. Figur 1c zeigt schematisierte Teil-Abtaststrahlengänge zur Erzeugung der Inkrementalsignale in dieser Positionsmesseinrichtung.

In den Figuren 1a - 1c sowie in den nachfolgenden ähnlichen Figuren zu alternativen Ausführungsformen sind die Teil-Abtaststrahlengänge zur Referenzimpulssignalerzeugung jeweils durchgezogen dargestellt, die Teil-Abtaststrahlengänge zur Erzeugung der Inkrementalsignale hingegen jeweils strichliniert.

Die dargestellte erste erfindungsgemäße optische Positionsmesseinrichtung umfasst eine Maßverkörperung, ausgebildet als Reflexions-Maßverkörperung 30 sowie eine hierzu in mindestens einer Messrichtung x bewegliche Abtasteinheit 10. Die Reflexions-Maßverkörperung 30 und die Abtasteinheit 10 sind mit zwei zueinander beweglichen Objekten verbunden, beispielsweise Maschinenteilen. Über die Positionsmesseinrichtung werden Positionssignale bzgl. der Lage der beiden zueinander beweglichen Objekte erzeugt und einer - nicht dargestellten - Steuereinheit zugeführt. Diese nutzt die Positionsdaten in bekannter Art und Weise zu Steuerungszwecken. Die erfindungsgemäße Positionsmesseinrichtung kann hierbei sowohl bzgl. linearer als auch bzgl. rotatorischer Verschiebebewegungen ausgebildet werden.

Das dargestellte erste erfindungsgemäße Positionsmesseinrichtung liefert - wie nachfolgend erläutert - neben periodischen Inkrementalsignalen $INC_A$, $INC_B$ noch ein Referenzimpulssignal RI an mindestens einer bekannten Referenzposition $x_{REF}$ entlang der Messstrecke. Auf die derart bestimmte, bekannte Absolutposition kann dann die deutlich höher auflösende Inkrementalmessung nachfolgend in üblicher Art und Weise bezogen werden.

Hierzu umfasst die Abtasteinheit 10 erste Abtastmittel zur Erzeugung des Referenzimpulssignals RI sowie zweite Abtastmittel zur Erzeugung der Inkrementalsignale $INC_A$, $INC_B$.

Zunächst sei die Erzeugung des Referenzimpulssignals RI mittels der ersten Abtastmittel anhand der hierzu vorgesehenen Teil-Abtaststrahlengänge erläutert.

Die als Reflexions-Maßverkörperung 30 ausgebildete Maßverkörperung umfasst neben einer oder mehreren sich in Messrichtung x erstreckenden Inkrementalteilungsspuren mit periodischen Inkrementalteilungen 33.1, 33.2 ferner mindestens eine Referenzmarkierungsspur mit einer Referenzmarkierung 31 an einer definierten Referenzposition $x_{REF}$. Grds. kann natürlich auch vorgesehen werden, mehrere Referenzmarkierungen an verschiedenen Referenzpositionen anzuordnen, beispielsweise in Form sog. abstandscodierter Referenzmarkierungen etc..

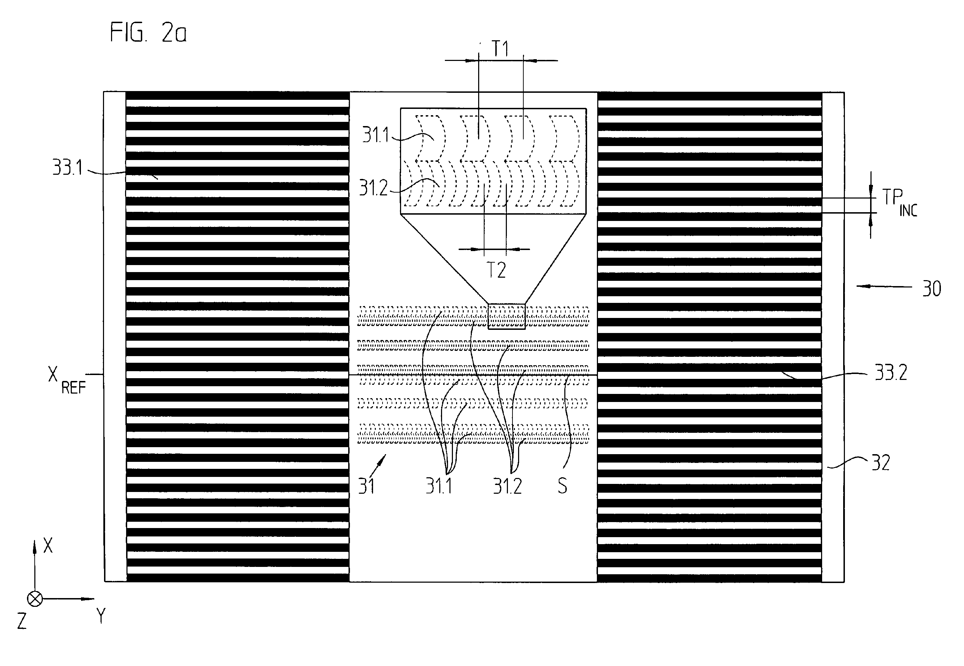

Wie aus der Draufsicht auf einen Teil der Reflexions-Maßverkörperung 30 in Figur 2a ersichtlich ist, sind in dieser Variante zur Erzeugung der Inkrementalsignale $INC_A$, $INC_B$ zwei parallele, identische Inkrementalteilungen 33.1, 33.2 auf einem Trägerkörper 32 angeordnet. Die beiden Inkrementalteilungen 33.1, 33.2 bestehen jeweils aus in Messrichtung x periodisch mit der Teilungsperiode $TP_{INC}$ angeordneten strichförmigen Teilungsbereichen unterschiedlicher optischer Eigenschaften. Beispielsweise kann es sich bei der Reflexions-Maßverkörperung 30 um Auflicht-Phasengitter handeln, die alternierende Teilbereiche mit unterschiedlichen phasenschiebenden Wirkungen auf die reflektierten Strahlenbündel. In einer möglichen Ausführungsform wird $TP_{INC} = 0.5 \mu m$ gewählt. Die Teilungsbereiche erstrecken sich in der Ebene der Reflexions-Maßverkörperung 30 senkrecht zur Messrichtung x, d.h. in der angegebenen Richtung y (nachfolgend auch Strichrichtung genannt).

Es sei an dieser Stelle darauf hingewiesen, dass die erste erfindungsgemäße Positionsmesseinrichtung natürlich auch mit einer als Durchlicht-Maßverkörperung ausgebildeten Maßverkörperung ausgebildet werden kann, die z.B. alternierend angeordnete Teilungsbereiche mit unterschiedlichen Transmissionseigenschaften aufweist.

An der Referenzposition $x_{REF}$ ist zwischen den beiden Spuren für die Inkrementalteilungen 33.1, 33.2 eine Referenzmarkierung 31 in der Referenzmarkierungsspur angeordnet. Diese besteht wie die Inkrementalteilungen 33.1, 33.2 aus einer bestimmten Anordnung von Teilbereichen bzw. Strukturelementen 31.1, 31.2 mit unterschiedlichen Reflexionseigenschaften. Deren bevorzugte Ausgestaltung wird für das vorliegende Beispiel der ersten erfindungsgemäßen Positionsmesseinrichtung nachfolgend noch detailliert erläutert.

Auf Seiten der Abtasteinheit 10 sind im vorliegenden Beispiel eine Lichtquelle 14, z.B. eine Laserdiode, sowie eine Kollimationsoptik 16, mehrere Referenzimpuls-Detektorelemente 15.1, 15.2 für die ReferenzimpulssignalErzeugung, mehrere Inkrementalsignal-Detektorelemente 20.1, 20.2, 20.3 für die Inkrementalsignalerzeugung (Figur 1 c) sowie verschiedene weitere optische Elemente angeordnet. Die verschiedenen optischen Elemente zur Erzeugung der Referenzimpuls- und Inkrementalsignale RI, $INC_A$, $INC_B$ sind hierbei auf einer Abtastplatte 11 in der Abtasteinheit 10 angeordnet und werden anschließend ebenfalls noch im einzelnen beschrieben.

Zu den oben erwähnten ersten Abtastmitteln zur Erzeugung des Referenzimpulssignals RI gehören hierbei verschiedene optische Elemente in der Abtasteinheit 10 bzw. der Abtasteinheit zugeordnete Elemente, darunter mindestens die Abbildungsoptik 12 sowie die in der Blendenebene angeordneten Blendenstrukturen 13.1, 13.2 mit jeweils mehreren Blendenöffnungen. Ferner sind die Referenzimpuls-Detektorelemente 15.1, 15.2 zu den ersten Abtastmitteln zu zählen.

Es sei an dieser Stelle darauf hingewiesen, dass sich die Lichtquelle 14, die Kollimationsoptik 16 und die verschiedenen Detektorelemente 15.1, 15.2, 20.1, 20.2, 20.3 nicht unbedingt in der Abtasteinheit 10 bzw. in einem entsprechenden Gehäuse derselben befinden müssen. So wäre in alternativen Varianten der vorliegenden Erfindung grundsätzlich auch möglich, diese Komponenten in bekannter Art und Weise mittels Lichtwellenleitern der Abtasteinheit 10 zuzuordnen und die verschiedenen Elemente räumlich getrennt außerhalb der Abtasteinheit 10 zu platzieren.

Das nach der Kollimationsoptik 16 parallel-gerichtete Strahlenbündel wird von einem Aufspaltgitter 19 in einen Abtaststrahlengang (durchgezogene Berandungslinien in Fig. 1a - 1c) zur Erzeugung des Referenzimpulssignals RI und in einen Abtaststrahlengang (strichlinierte Berandungslinien in Fig. 1 a - 1c) zur Erzeugung der Inkrementalsignale $INC_A$, $INC_B$ aufgespalten. Wie aus Figur 1b ersichtlich ist, bedeutet dies, dass das zur Referenzimpulssignal-Erzeugung abgespaltene Teilstrahlenbündel in den Bereich zwischen den beiden Inkrementalteilungen 33.1, 33.2 auf der Reflexions-Maßverkörperung 30 hin abgelenkt wird. Die Gitterkonstante des Aufspaltgitters 19 wird vorzugsweise so gewählt, dass im Fall des Norm-Abtastabstands zwischen Abtasteinheit 10 und Reflexions-Maßverkörperung 30 genau ein Bereich in der Mitte zwischen den beiden Inkrementalteilungen 33.1, 33.2 beleuchtet wird. Von diesem Bereich erfolgt eine Rückreflexion in Richtung der Abtasteinheit 10. In der Abtasteinheit 10 treffen die rückreflektierten Teilstrahlenbündel auf eine Abbildungsoptik 12, die an der Unterseite der Abtastplatte 11 angeordnet ist. Die Abbildungsoptik 12 kann in verschiedenen Formen auf der Abtastplatte 11 ausgebildet werden, etwa als einzelne Fresnel-Linse. Alternativ hierzu ist auch die Ausbildung der Abbildungsoptik 12 als Linsenarray möglich, das aus mehreren Einzellinsen besteht; hierzu wird im Verlauf der nachfolgenden Beschreibung noch detaillierter eingegangen.

Die Platzierung der Referenzmarkierung 31 zwischen den beiden Inkrementalteilungen 33.1, 33.2 bietet den maßgeblichen erfindungsgemäßen Vorteil, dass sich im Fall einer eventuellen Verdrehung von Reflexions-Maßverkörperung 30 und Abtasteinheit 10 um die z-Achse (Moire-Verdrehung) keine (verfälschende) Veränderung der Lage des Referenzimpulssignales RI relativ zu den Inkrementalsignalen $INC_A$, $INC_B$ ergibt. Dies lässt sich zudem bei relativ geringem Platzbedarf für die entsprechende Vorrichtung realisieren.

Die Abbildungsoptik 12 ist optisch dergestalt dimensioniert, dass deren bildseitige Brennebene mit der Oberseite der Abtastplatte 11 bzw. einer dort befindlichen Blendenebene zusammenfällt, in der zwei Blendenstrukturen 13.1, 13.2 mit jeweils mehreren Blendenöffnungen angeordnet sind. Den Blendenstrukturen 13.1, 13.2 nachgeordnet sind zwei Referenzimpuls-Detektorelemente 15.1, 15.2 in der Abtasteinheit 10, die zur Erfassung des durch die Blendenöffnungen transmittierten Lichts und damit zur Erzeugung des Referenzimpulssignales RI herangezogenen Signale S1, S2 dienen. Objektseitig liegt der von der Abbildungsoptik 12 abgebildete Fokus auf Höhe der halben Entfernung zwischen dem neutralen Drehpunkt und der Oberfläche der Reflexions-Maßverkörperung 30. Das heißt, die Abbildungsoptik 12 ist objektseitig auf eine Ebene bzw. einen Punkt abgestimmt, der sich aus der Lage des systembedingten neutralen Drehpunktes ergibt. Als neutraler Drehpunkt ist hierbei derjenige Punkt definiert, um den die Abtasteinheit 10 oder die Reflexions-Maßverkörperung 30 verkippt werden kann, ohne dass Fehler bei der Positionsbestimmung resultieren, d.h. Fehler bei der Erzeugung des Referenzimpulssignals RI bzw. der Inkrementalsignale $INC_A$, $INC_B$. Der neutrale Drehpunkt kann hierbei je nach Systemgegebenheiten in unterschiedlichen Ebenen zu liegen kommen, also sowohl in der Maßverkörperungsebene als auch unterhalb bzw. oberhalb der Maßverkörperungsebene.

Maßgeblich für die Erzeugung des Referenzimpulssignals RI ist die gewählte Ausgestaltung der Referenzmarkierung 31 auf Seiten der Reflexions-Maßverkörperung 30. Die entsprechende Ausgestaltung derselben ist verantwortlich dafür, dass an der Referenzposition $x_{REF}$ ein Referenzimpulssignal RI sicher detektierbar ist. Zur näheren Erläuterung der Referenzmarkierung 31 sei insbesondere auf die Figur 2a verwiesen, die eine Draufsicht auf die Reflexions-Maßverkörperung 30 im Bereich der Referenzposition $x_{REF}$ zeigt.

Die Referenzmarkierung 31 weist im Bereich der Referenzposition $x_{REF}$ zwischen den beiden Inkrementalteilungen 33.1, 33.2 einen ersten Satz von Strukturelementen 31.1 sowie einen zweiten Satz von Strukturelementen 31.2 in bestimmten geometrischen Anordnungen auf. Die Strukturelemente 31.1, 31.2 beider Sätze sind in der Ebene der Reflexions-Maßverkörperung 30 senkrecht zur Messrichtung x, d.h. in der angegebenen Strichrichtung y, periodisch mit einer ersten Transversalperiodizität T1 bzw. einer zweiten Transversalperiodizität T2 angeordnet. Die Transversalperiodizitäten T1, T2 der beiden Sätze erster und zweiter Strukturelemente 31.1, 31.2 unterscheiden sich hierbei voneinander, wie auch aus Figur 2a ersichtlich ist; beispielsweise kann T1 = 2.4$\mu$m und T2 = 2.0$\mu$m gewählt werden.

Im dargestellten Beispiel der ersten erfindungsgemäßen Positionsmesseinrichtung gemäß Figur 2a umfasst die Referenzmarkierung 31 insgesamt vier separate Sätze erster Strukturelemente 31.1 sowie vier separate Sätze zweiter Strukturelemente 31.2, die in Messrichtung x parallel zueinander benachbart angeordnet sind. In Messrichtung x sind demzufolge insgesamt acht Sätze von Strukturelementen 31.1, 31.2 angeordnet. Die Anordnung der jeweils vier Sätze erster und zweiter Strukturelemente 31.1, 31.2 erfolgt in Messrichtung x spiegelsymmetrisch zu einer Symmetrieachse S, die senkrecht zur Messrichtung x in der Ebene der Reflexions-Maßverkörperung 30 orientiert ist. Die Symmetrieachse S befindet sich im vorliegenden Beispiel genau an der Referenzposition $x_{REF}$. Strukturelemente 31.1, 31.2 unterschiedlicher Transversalperiodizität T1, T2 liegen sich bzgl. der Symmetrieachse S spiegelsymmetrisch gegenüber.

Wie aus der Ausschnittsvergrößerung der Referenzmarkierung 31 in Figur 2a ersichtlich ist, besitzen die einzelnen Strukturelemente 31.1, 31.2 in diesem Beispiel jeweils eine Querschnittsform, die sich aus zwei in Quererstreckungsrichtung y parallelen Berandungsgeraden und zwei in Längserstreckungsrichtung x gekrümmten, parallelen Berandungslinien zusammensetzt. Aus der gewählten Querschnittsform resultiert die später noch detailliert erläuterte optische Wirkung dieser Elemente. Sätze mit ersten und zweiten Strukturelementen 31.1, 31.2 unterscheiden sich i.w. durch die unterschiedliche Transversalperiodizität T1, T2, mit der die einzelnen Strukturelemente 31.1, 31.2 in der Richtung y periodisch angeordnet sind.

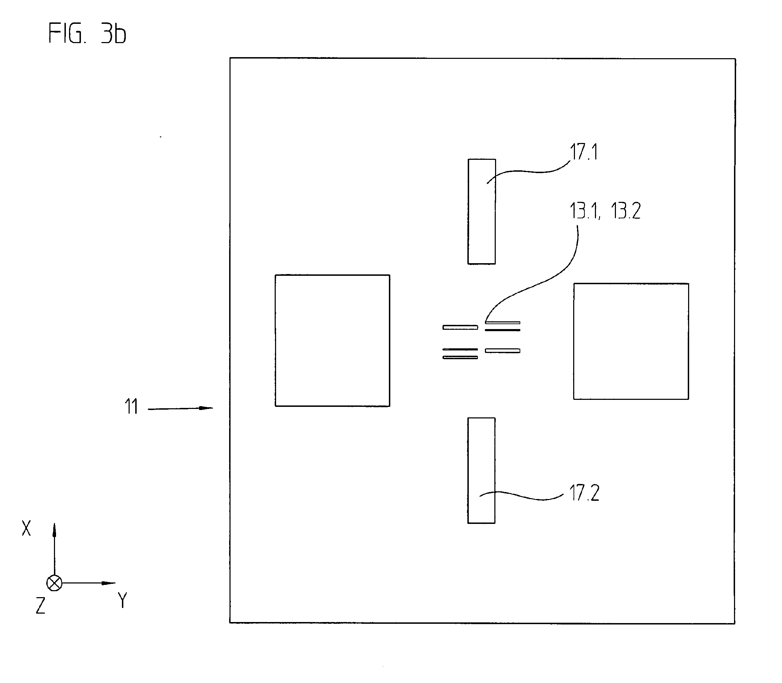

Treffen nunmehr die zur Erzeugung des Referenzimpulssignals RI genutzten Teilstrahlenbündel, vom Aufspaltgitter 19 der Abtasteinheit 10 kommend, auf den Bereich der Referenzmarkierung 31 mit den Sätzen erster und zweiter Strukturelemente 31.1, 31.2, so werden die Teilstrahlenbündel aufgrund der unterschiedlichen Transversalperiodizitäten T1 und T2 in den verschiedenen Sätzen auch unterschiedlich in y-Richtung in der y-z-Ebene abgelenkt. Der jeweilige Ablenkwinkel hängt hierbei in bekannter Art und Weise unmittelbar mit der jeweiligen Transversalperiodizität T1, T2 zusammen. Über die Abbildungsoptik 12 in der Abtasteinheit 10 werden die zurückreflektierten Teilstrahlenbündel aus dem Bereich der Referenzmarkierung 31 in die Blendenebene abgebildet. Die dort angeordneten zwei Blendenstrukturen 13.1, 13.2 sind in Bezug auf die geometrische Anordnung der jeweils mehreren Blendenöffnungen auf die geometrische Anordnung der Sätze von ersten und zweiten Strukturelementen 31.1, 31.2 der Referenzmarkierung 31 abgestimmt. Das heißt, die Öffnungen einer ersten Blendenstruktur 13.1 sind auf die Anordnung der Sätze erster Strukturelemente 31.1 abgestimmt und die Öffnungen einer zweiten Blendenstruktur 13.2 sind auf die Anordnung der Sätze zweiter Strukturelemente 31.2 abgestimmt. Dies ist aus dem Vergleich der Figuren 2a und 3b ersichtlich. So sind in der Referenzmarkierung gemäß dem dargestellten Beispiel in Figur 2a vier Sätze erster Strukturmarkierungen 31.1 vorgesehen, denen die darauf abgestimmte erste Blendenstruktur 13.1 mit den vier angedeuteten Blendenöffnungen zugeordnet ist; analog sind den vier Sätzen zweiter Blendenstrukturelemente 31.2 die vier darauf abgestimmten Blendenöffnungen der zweiten Blendenstruktur 13.2 zugeordnet; selbstverständlich kann auch eine andere Anzahl von Blendenöffnungen sowie Sätzen von Strukturelementen gewählt werden. Bei der Wahl der Positionen der Blendenöffnungen muss natürlich noch der aufgrund der Abbildungsoptik 12 resultierende Abbildungsmaßstab m berücksichtigt werden.

Eine derartige Abstimmung hat zur Folge, dass im Bereich benachbart zur Referenzposition $x_{REF}$ die beiden den Blendenstrukturen 13.1, 13.2 nachgeordneten Referenzimpuls-Detektorelemente 15.1, 15.2 jeweils ein Signalmaximum der darüber erfassten Signale S1, S2 detektieren können.

Wie bereits oben angedeutet kann die Abbildungsoptik alternativ auch als Linsenarray ausgebildet werden, das mehrere Einzellinsen umfasst. Dadurch können in Strichrichtung y längere Sätze mit Strukturelementen in die Blendenebene abgebildet werden. Dies hat Vorteile in Bezug auf die Signalstärke der detektierten Signale. In diesem Fall wird jeweils eine Teilsequenz eines Satzes mit Strukturelementen durch eine Einzellinse abgebildet. Auch in dieser Variante ist jedem Satz von Strukturelementen 31.1, 31.2 eine Blendenöffnung der Blendenstruktur 13.1, 13.2 definiert zugeordnet. Die Positionen der Blendenöffnungen ergeben sich abgestimmt wiederum aus der Abbildung der Sätze von Strukturelementen 31.1, 31.2 über die Abbildungsoptik 12 mit dem Abbildungsmaßstab m.

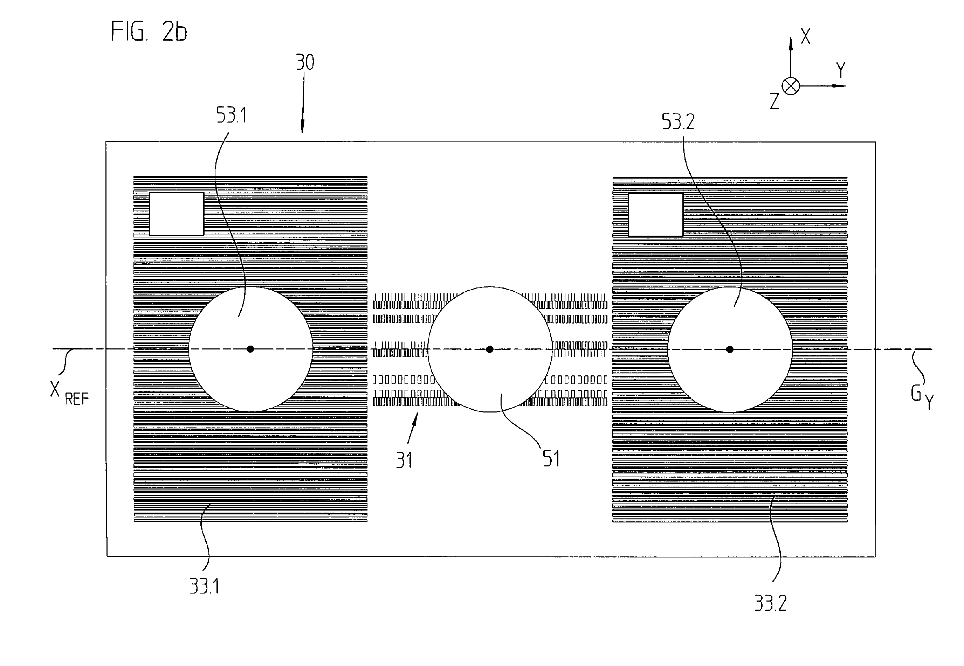

In Fig. 2b ist nochmals eine Draufsicht auf die Reflexions-Maßverkörperung 30 der ersten erfindungsgemäßen Positionsmesseinrichtung im Bereich der Referenzposition $x_{REF}$ gezeigt. Ergänzend zur Darstellung in Fig. 2a sind in Fig. 2b die beiden Inkrementalsignal-Abtastfelder 53.1, 53.2 in den beiden Inkrementalteilungen 33.1, 33.2 eingezeichnet, die von einem Abtaststrahlenbündel zur Erzeugung der Inkrementalsignale $INC_A$, $INC_B$ je einmal beaufschlagt werden. Ferner ist das Referenzimpuls-Abtastfeld 51 im Bereich der Referenzmarkierung in Fig. 2b erkennbar, das zur Erzeugung des Referenzimpulssignals RI von einem Abtast-Strahlenbündel mittels der ersten Abtastmittel einmal beaufschlagt wird.

Wie aus Figur 2b erkennbar, liegen in diesem Beispiel die Zentren der beiden Inkrementalsignal-Abtastfelder 53.1, 53.2 und des Referenzimpuls-Abtastfeldes 51 auf einer Geraden Gy in der Maßverkörperungsebene, die senkrecht zur Messrichtung x orientiert ist. Die Lage der verschiedenen Abtastfelder 51, 53.1, 53.2 auf der Reflexions-Maßverkörperung 30 wird durch die entsprechende Auslegung der ersten und zweiten Abtastmittel geeignet eingestellt.

Aufgrund des zwischen den beiden Inkrementalsignal-Abtastfeldern 33.1, 33.2 angeordneten Referenzimpuls-Abtastfeldes 51 lässt sich die gewünschte Unempfindlichkeit des Systems bei einer eventuellen Moire-Verdrehung von Maßverkörperung 30 und Abtasteinheit 10 erreichen.

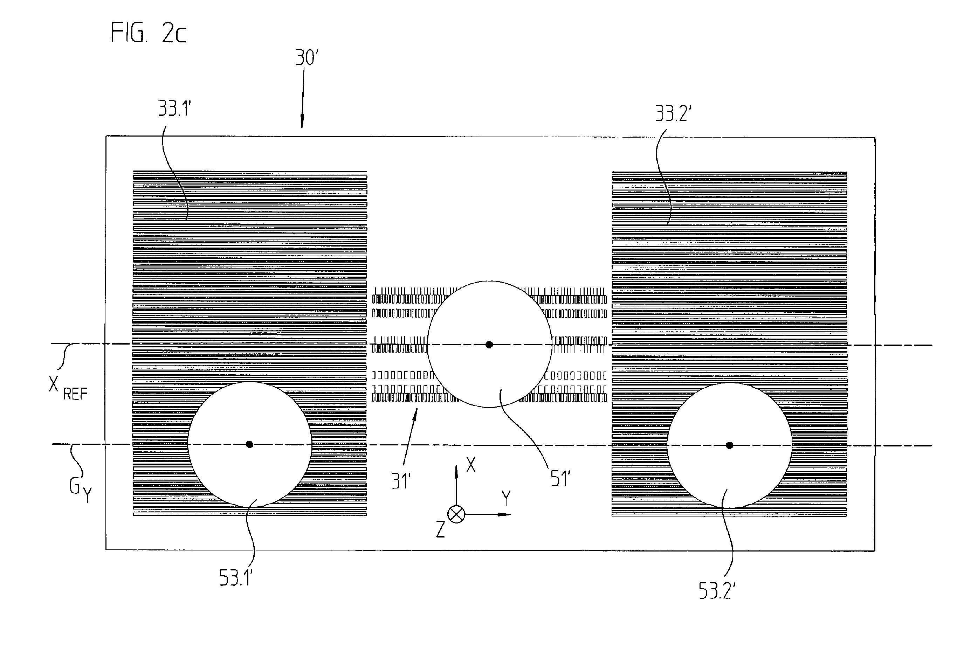

Eine geringfügig hiervon abgewandelte Variante mit unterschiedlichen Positionen der verschiedenen Abtastfelder 51', 53.1', 53.2' zeigt Figur 2c. Hier sind die ersten und zweiten Abtastmittel dergestalt ausgelegt, dass die Zentren der beiden Inkrementalsignal-Abtastfelder 53.1', 53.2' auf der Reflexions-Maßverkörperung 30' wiederum auf einer Geraden Gy' in der der Maßverkörperungsebene liegen, die senkrecht zur Messrichtung x orientiert ist. Das Zentrum des Referenzimpulssignal-Abtastfeldes 51' ist jedoch hierzu in Messrichtung x versetzt angeordnet. Über diese Variante lässt sich erreichen, dass die Position des Referenzimpulssignals RI im Fall einer Moiré-Verdrehung von Maßverkörperung und Abtasteinheit 10 um die z-Achse relativ unabhängig vom jeweiligen Moiré-Winkel bleibt. Ferner kann mit dieser Variante aufgrund der versetzten Abtastfelder ein unerwünschtes Übersprechen von Störungen auf die Inkrementalteilungsspur minimiert werden.

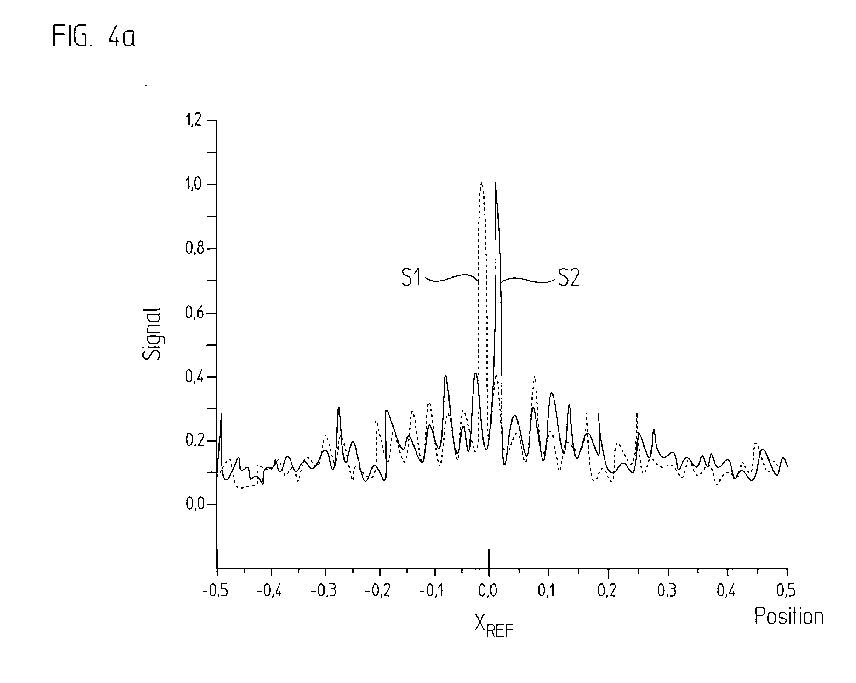

Die an den Referenzimpuls-Detektorelementen 15.1, 15.2 anliegenden Signale S1, S2 im Bereich um die Referenzposition $x_{REF}$ sind in Figur 4a dargestellt. Wie aus diesen Signalen S1, S2 letztlich das interessierende Referenzimpulssignal RI erzeugbar ist, wird im Verlauf der nachfolgenden Beschreibung noch detailliert erläutert.

Zur Erzeugung der Inkrementalsignale $INC_A$, $INC_B$ mittels der zweiten Abtastmittel sei nunmehr insbesondere auf die Figur 2 sowie die Figuren 1 a und 1b verwiesen, in denen die Teil-Abtaststrahlengänge für die Inkrementalsignalerzeugung jeweils strichliniert angedeutet sind.

Hierbei gelangen die von der Lichtquelle 14 emittierten Strahlenbündel für die Inkrementalsignalerzeugung nach dem unabgelenkten Passieren des Aufspaltgitters 19 auf die Inkrementalteilung 33.2 auf der Reflexionsmaßverkörperung 32. Von dort erfolgt eine Rückreflexion von in der x-z-Ebene aufgespaltenen Teilstrahlenbündel in Richtung der Abtasteinheit 10, wo die auf der Unterseite der Abtastplatte 11 angeordneten Abtastgitter 18.3, 18.4 durchlaufen werden (Fig. 1a). Diese lenken die Teilstrahlenbündel in y-Richtung ab, so dass die Teilstrahlenbündel auf zwei Reflektorelemente 17.1, 17.2 auf der Oberseite der Abtastplatte 11 auftreffen (Fig. 1 b). Von den Reflektorelementen 17.1, 17.2 erfolgt eine Rückreflexion der beiden Teilstrahlenbündel in Richtung weiterer Abtastgitter 18.1, 18.2 auf der Unterseite der Abtastplatte 11, die die Teilstrahlenbündel dann wieder in Richtung der zweiten Inkrementalteilung 33.1 auf der Reflexions-Maßverkörperung 30 zurücklenken (Fig. 2). Von der Inkrementalteilung 33.1 erfolgt eine nochmalige Rückreflexion der Teilstrahlenbündel in Richtung der Abtasteinheit 10. Dort gelangen die beiden zurückreflektierten Teilstrahlenbündel auf ein Vereinigungsgitter 18.5 auf der Unterseite der Abtastplatte 11. Vom Vereinigungsgitter 18.5 propagieren schließlich drei Paare interferierender Teilstrahlenbündel in Richtung dreier nachgeordneter Inkrementalsignal-Detektorelemente 20.1, 20.2, 20.3, die zur Erfassung von drei um je 120° phasenverschobenen periodischen Signalen dienen, die verschiebungsabhängig moduliert werden. Diese werden schließlich noch in bekannter Art und Weise über eine - nicht dargestellte - nachgeordnete Elektronik in zwei um 90° phasenverschobene Inkrementalsignale $INC_A$, $INC_B$ umgewandelt. Im Zusammenhang mit der Inkrementalabtastung sei im übrigen auch auf die DE 102006042743.2 der Anmelderin verwiesen.

Zu den oben erwähnten zweiten Abtastmitteln zur Erzeugung der Inkrementalsignale $INC_A$, $INC_B$ gehören hierbei wiederum verschiedene optische Elemente in der Abtasteinheit 10 bzw. der Abtasteinheit 10 zugeordnete Elemente, darunter mindestens mehrere Abtastgitter 18.1 - 18.4, mindestens ein Vereinigungsgitter 18.5 sowie mindestens zwei Reflektorelemente 17.1, 17.2. Ferner sind die Inkrementalsignal-Detektorelemente 20.1, 20.2, 20.3 zu den zweiten Abtastmitteln zu zählen.

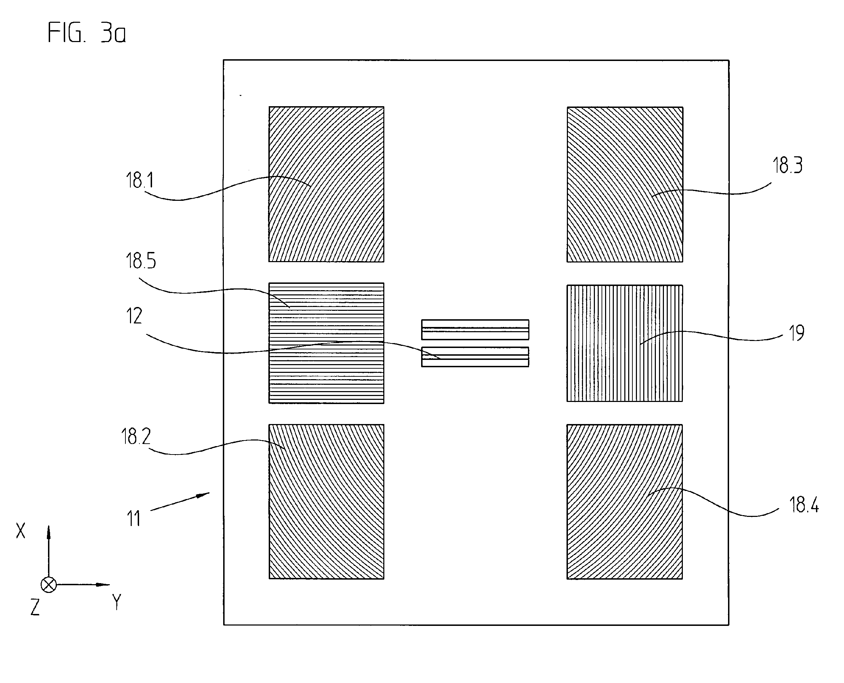

Die Anordnung der verschiedenen optischen Elemente für die Erzeugung des Referenzimpulssignals RI als auch der Inkrementalsignale $INC_A$, $INC_B$ auf der Ober- und Unterseite der Abtastplatte 11 ist in den Figuren 3a und 3b dargestellt.

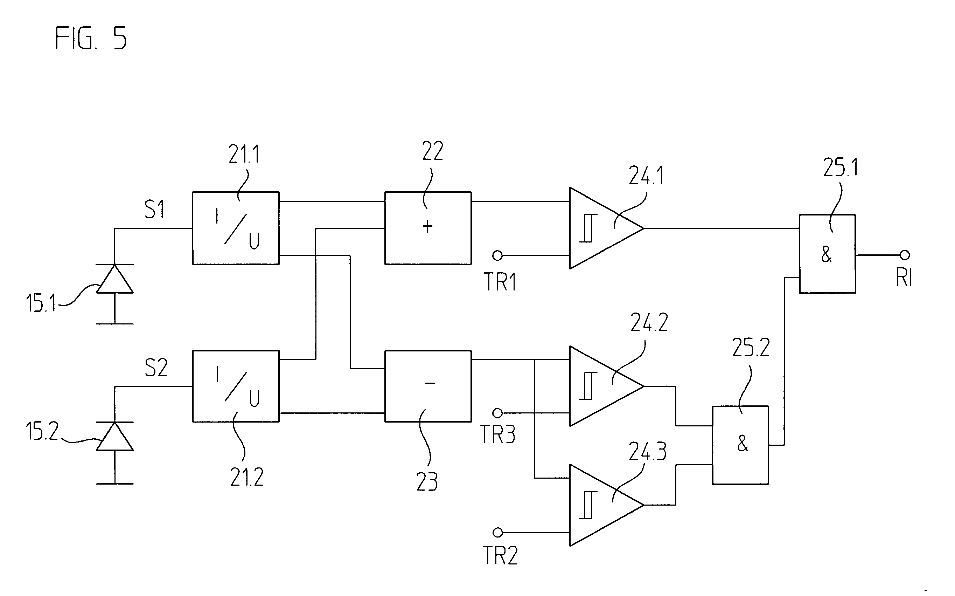

Wie bereits oben angedeutet werden im Bereich der Referenzposition $x_{REF}$ über die Referenzimpuls-Detektorelemente 15.1, 15.2 die Signale S1, S2 erzeugt, wie sie in Fig. 4a dargestellt sind. Die Breite der Signale S1, S2 mit etwa 15 $\mu$m ist jedoch für ein Referenzimpulssignal RI noch nicht hinreichend schmal genug, insbesondere wenn wie vorab beschrieben hochauflösende Inkrementalsignale $INC_A$, $INC_B$ mit Signalperioden von z.B. 0.5 $\mu$m genutzt werden. Es ist hierbei grundsätzlich wünschenswert, ein Referenzimpulssignal RI ausgangsseitig zur Verfügung zu haben, welches im Bereich der Referenzposition $x_{REF}$ eine Breite besitzt, die der Breite der erzeugten Inkrementalsignale $INC_A$, $INC_B$ entspricht. Aus diesem Grund ist über die in Figur 5 dargestellte Schaltungsanordnung eine Weiterverarbeitung der Signale S1, S2 im vorliegenden Ausführungsbeispiel vorgesehen, die nachfolgend erläutert wird.

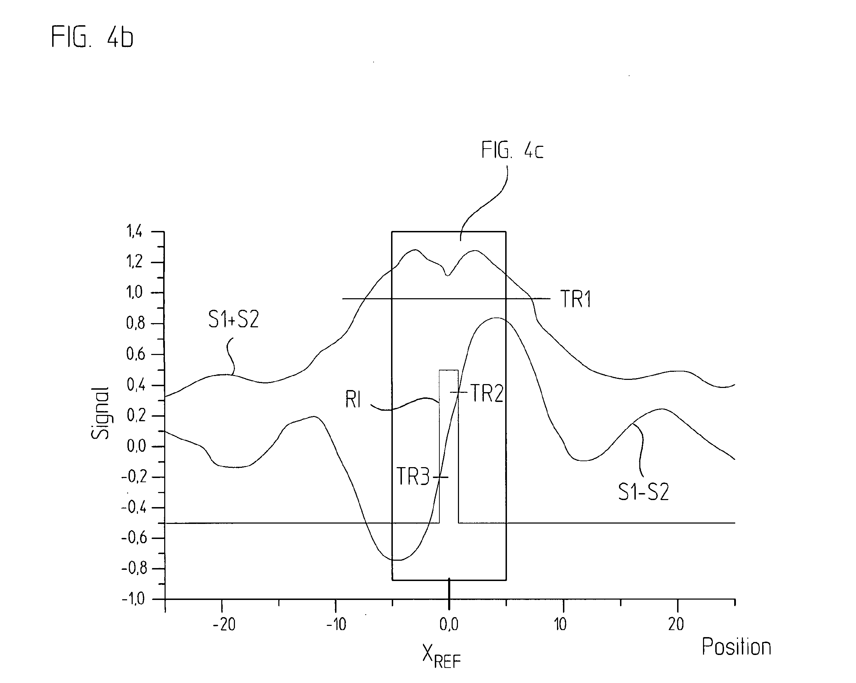

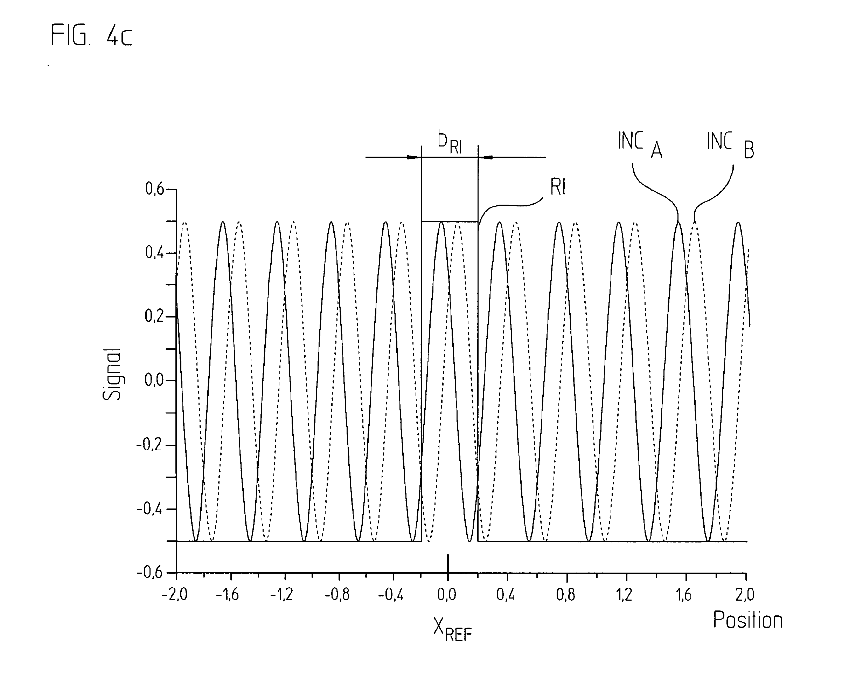

Die Signale S1, S2 an den Referenzimpuls-Detektorelementen 15.1, 15.2 werden hierbei zunächst Strom-Spannungs-Wandlern 21.1, 21.2 zugeführt. Über die nachgeordneten Summen- und Differenzbildungselemente 22, 23 wird anschließend ein Summensignal S1+S2 sowie ein Differenzsignal S1-S2 gebildet; die zugehörigen Summen- und Differenzsignale S1+S2, S1-S2 sind im Bereich der Referenzposition $x_{REF}$ in Fig. 4b dargestellt. Das Summensignal S1+S2 wird anschließend einem ersten Komparatorelement 24.1 zugeführt, an dessen anderem Eingang das Referenzsignal bzw. die Triggerschwelle TR1 anliegt. Das Differenzsignal S1-S2 wird einem zweiten und dritten Komparatorelement 24.2, 24.3 zugeführt, an deren anderen Eingängen die Triggerschwellen TR3 und TR2 als Referenzsignale anliegen. In Figur 4b ist die Lage der verschiedenen Triggerschwellen TR1, TR2 und TR3 in Bezug auf das Summen- und Differenzsignal S1+S2, S1-S2 dargestellt. Das Ausgangssignal des ersten Komparatorelements 24.1 wird anschließend einem ersten Eingang eines UND-Verknüpfungselements 25.1 zugeführt. Dessen zweitem Eingang wird das Ausgangssignal eines zweiten UND-Verknüpfungselements 25.2 zugeführt, letzterem wurden die Ausgangssignale der zweiten und dritten Komparatorelemente 24.2, 24.3 zugeführt. Bei der angegebenen Wahl der Triggerschwellen TR1, TR2, TR3 und der gezeigten Verschaltung, d.h. über die erfolgenden logischen UND-Verknüpfungen resultiert am Ausgang des Verknüpfungselements 25.1 das gewünschte Referenzimpulssignal RI, das eine Breite $b_{RI}$ = 0.5 $\mu$m besitzt, die der Breite $b_{INC}$ der erzeugten Inkrementalsignale $INC_A$, $INC_B$ entspricht, wie dies in Fig. 4c dargestellt ist.

Nachfolgend sei nunmehr auf weitere Details zu einer vorteilhaften Ausgestaltung der Referenzmarkierung 31 auf Seiten der Reflexions-Maßverkörperung 30 eingegangen. Über die nachfolgend erläuterten Maßnahmen lässt sich insbesondere sicherstellen, dass die Lage des neutralen Drehpunkts bei der Erzeugung des Referenzimpulssignals RI an die Lage des neutralen Drehpunktes bei der Inkrementalsignal-Erzeugung angepasst werden kann. Dies stellt eine wichtige Maßnahme zur Vermeidung von Fehlmessungen bei einer eventuellen Verkippung von Abtasteinheit 10 und Reflexions-Maßverkörperung 30 dar.

Zu diesem Zweck ist vorgesehen, die bereits oben erwähnten Strukturelemente 31.1, 31.2 der Referenzmarkierung 31 als diffraktive optische Elemente bzw. diffraktive Strukturelemente auszubilden, die in Messrichtung x optisch wie eine Zylinderlinse mit einer bestimmten Brennweite f wirken und demzufolge in Messrichtung x einen virtuellen oder reellen Brennpunkt im Abstand der Brennweite f von der Reflexions-Maßverkörperung besitzen. In der y-z-Ebene besitzen die Strukturelemente 31.1, 31.2 eine optische Wirkung dergestalt, dass diese als Gitter mit der Transversalperiode T1 oder T2 fungieren.

Vorzugsweise entspricht die gewählte Brennweite f der Strukturelemente 31.1, 31.2 dem halben Abstand des neutralen Drehpunktes der Inkrementalsignal-Abtastung von der Reflexions-Maßverkörperung 30, wenn dieser systembedingt ober- oder unterhalb der Reflexions-Maßverkörperung 30 liegt. Auf diese Art und Weise kann die Lage des neutralen Drehpunkts der Referenzimpulssignal-Erzeugung an die Lage des neutralen Drehpunkts der Inkrementalsignal-Erzeugung angepasst werden. Es lassen sich somit bei einer eventuellen Verkippung von Abtasteinheit 10 und Reflexions-Maßverkörperung 30 andernfalls resultierende Fehler bei der Positionsmessung vermeiden.

Weiterhin ist vorgesehen, die Abbildungsoptik 12 in der Abtasteinheit 10 objektseitig an die Lage der Brennebene der Strukturelemente 31.1, 31.2 anzupassen. Diese Brennebene wird über die Abbildungsoptik 12 in die Blendenebene abgebildet, in der die Blendenstrukturen 13.1, 13.2 angeordnet sind. Diese Anforderungen lassen sich durch die Phasenfunktion der Abbildungsoptik 12 folgendermaßen charakterisieren:

$$P = \frac{2\pi}{\lambda_D}\left(\sqrt{x^2 + (a_1 \pm f)^2} + n\sqrt{x^2 + a_2^2}\right) \qquad \text{(Gl. 1)}$$

mit:

$\lambda_D$   := Wellenlänge der verwendeten Lichtquelle
x     := Koordinate in Messrichtung
$a_1$    := Abstand zwischen Maßverkörperungsebene und Abbildungsoptik
$a_2$    := Abstand zwischen Abbildungsoptik und Blendenebene
n     := Brechungsindex der Abtastplatte
f     := Brennweiten der Strukturelemente der Referenzmarkierung

Die Phasenfunktion beschreibt hierbei die Geometrie der Abbildungsoptik 12 in Form der Höhenlinien dieses Elements.

Der Abbildungsmaßstab m der Abbildungsoptik 12 wird vorzugsweise folgendermaßen gewählt:

$$m = -n\frac{(a_1 \pm f)}{a_2} \qquad \text{(Gl. 2)}$$

mit:

$a_1$    := Abstand zwischen Maßverkörperungsebene und Abbildungsoptik
$a_2$    := Abstand zwischen Abbildungsoptik und Blendenebene
n     := Brechungsindex der Abtastplatte
f     := Brennweiten der Strukturelemente der Referenzmarkierung

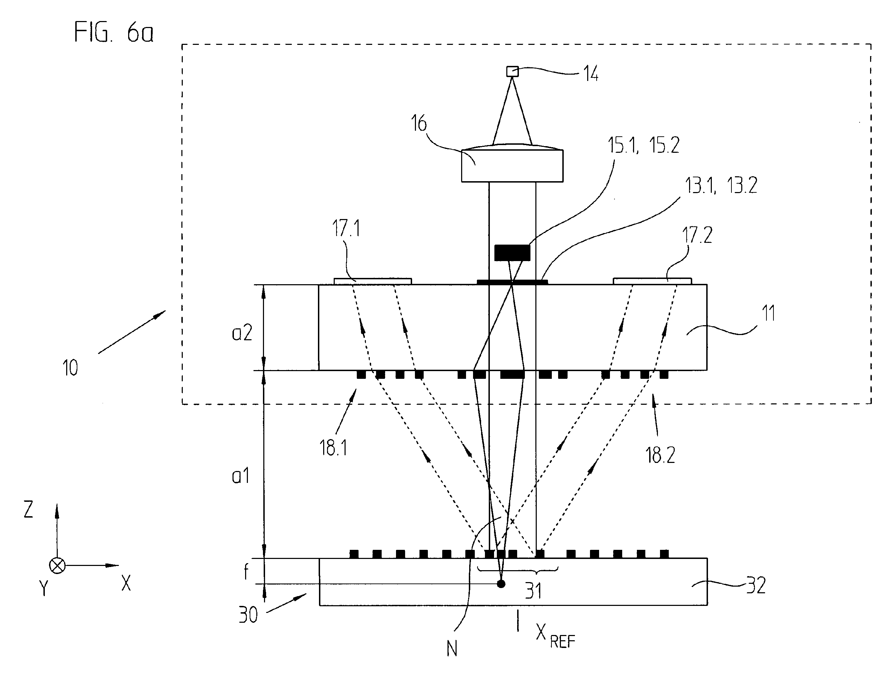

In Figur 6a ist der Fall schematisch dargestellt, dass der neutrale Drehpunkt N abtastungsbedingt deutlich unterhalb der Maßverkörperungsebene liegt. Die Brennweite f der Strukturelemente 31.1, 31.2 der Referenzmarkierung 31 wird wie ersichtlich gleich dem halben Abstand des neutralen Drehpunkts N von der Reflexions-Maßverkörperung 30 gewählt und auf die Lage der Brennebene die Abbildungsoptik 12 abgestimmt.

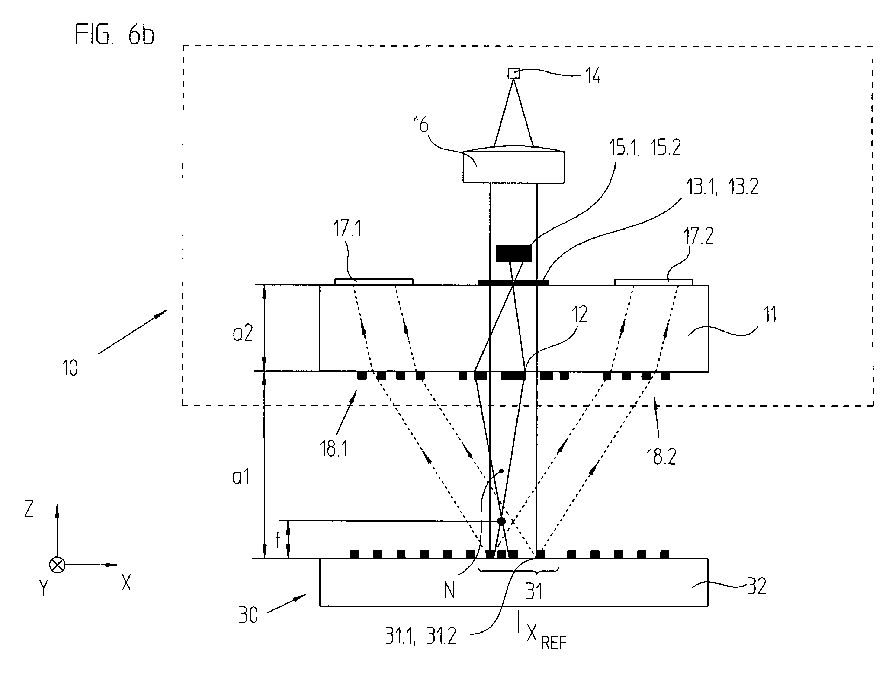

Figur 6b zeigt hingegen denjenigen Fall schematisch, bei dem der neutrale Drehpunkt N abtastungsbedingt deutlich oberhalb der Maßverkörperungsebene liegt. Die Brennweite f der Strukturelemente 31.1, 31.2 der Referenzmarkierung 31 wird wie ersichtlich ebenfalls gleich dem halben Abstand des neutralen Drehpunkts N von der Reflexions-Maßverkörperung 30 gewählt und wiederum auf die Lage der Brennebene die Abbildungsoptik 12 abgestimmt.

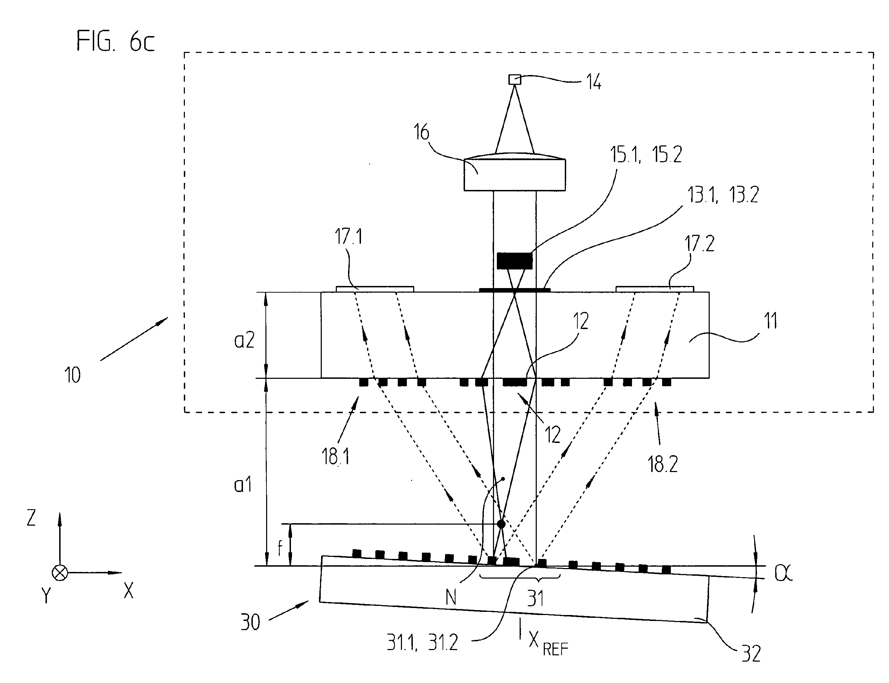

Im Fall der Situation gemäß Figur 6b resultiert bei einer eventuellen Verkippung der Reflexions-Maßverkörperung 30 um eine Achse in y-Richtung um den Winkelbetrag $\alpha$ (siehe Fig. 6c) eine Verschiebung des Fokus der Abbildungsoptik 12 in linearer Näherung um $2f\alpha$. Dies entspricht dem Verschiebungsbetrag der Inkrementalsignale, d.h. die Referenzsignalerzeugung und die Inkrementalsignalerzeugung werden gleichermaßen von der Verkippung beeinflusst.

Über die erläuterte Ausgestaltung der Referenzmarkierung lässt sich in der ersten Positionsmesseinrichtung demzufolge der neutrale Drehpunkt der Referenzimpulssignalerzeugung mit dem neutralen Drehpunkt der Inkrementalsignalerzeugung in Deckung bringen. Beide Signale werden dann aufgrund der erfindungsgemäßen Maßnahmen von einer eventuellen Verkippung der Reflexions-Maßverkörperung gegenüber der Abtasteinheit gleichermaßen beeinflusst. Die oben beschriebene Lösung mit den Strukturelementen bestimmter optischer Wirkung erlauben die Anpassung der Lage des neutralen Drehpunkts der Referenzimpulssignalerzeugung besonders vorteilhaft für diejenigen Fälle, in denen der neutrale Drehpunkt der Inkrementalsignalerzeugung abtastprinzip-bedingt deutlich entfernt von der Maßverkörperungsebene zu liegen kommt.

Bei entsprechenden Abtastprinzipien ist darüber hinaus auch möglich, dass der neutrale Drehpunkt der Inkrementalsignalerzeugung relativ nah benachbart zur Maßverkörperungsebene zu liegen kommen kann. In diesem Fall erweist es sich als vorteilhaft einzelne Sätze von Strukturelementen nicht mit den erwähnten optischen Zylinderlinseneigenschaften auszugestalten, sondern die Strukturelemente in Bezug auf ihre Querschnittsform rechteckförmig auszubilden. Die gemischte Anordnung der Sätze mit den oben erläuterten Strukturelementen mit definierter optischer Wirkung einerseits und den Sätzen mit Strukturelementen ohne eine derartige optische Wirkung andererseits gestattet es, den neutralen Drehpunkt der Referenzimpulssignalerzeugung in die unmittelbare Nähe der Maßverkörperungsebene zu verlegen.

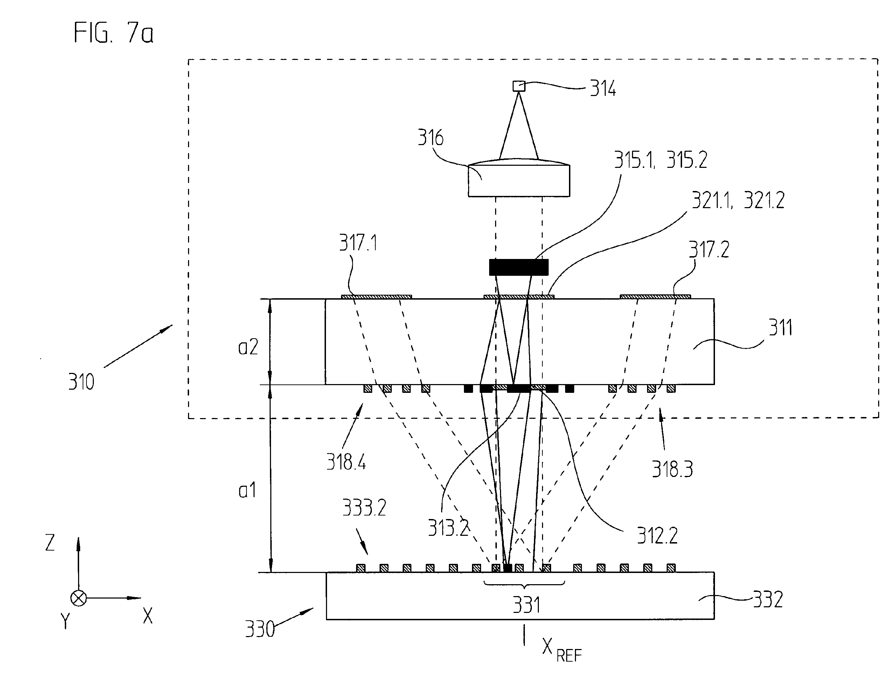

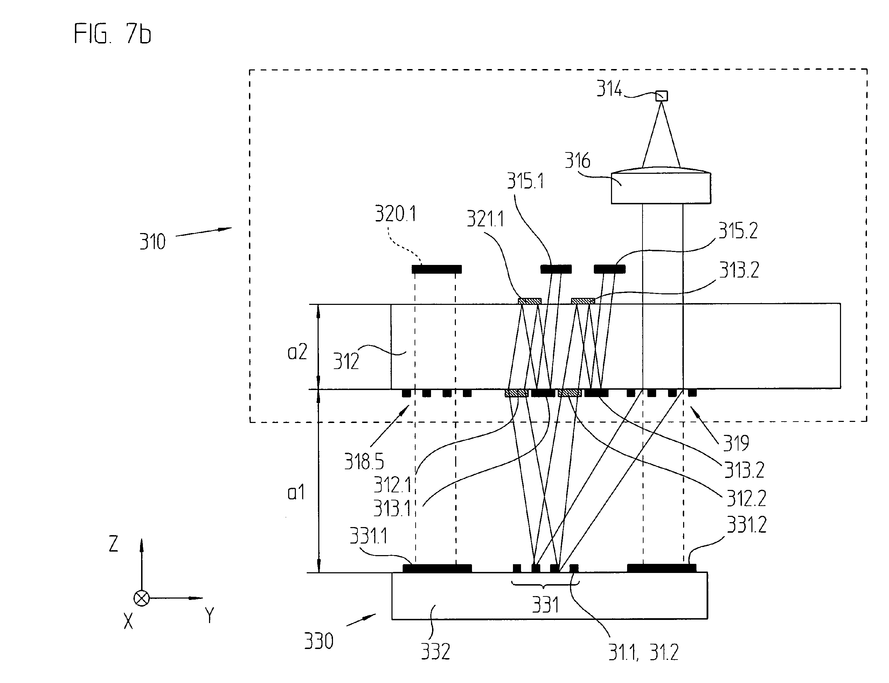

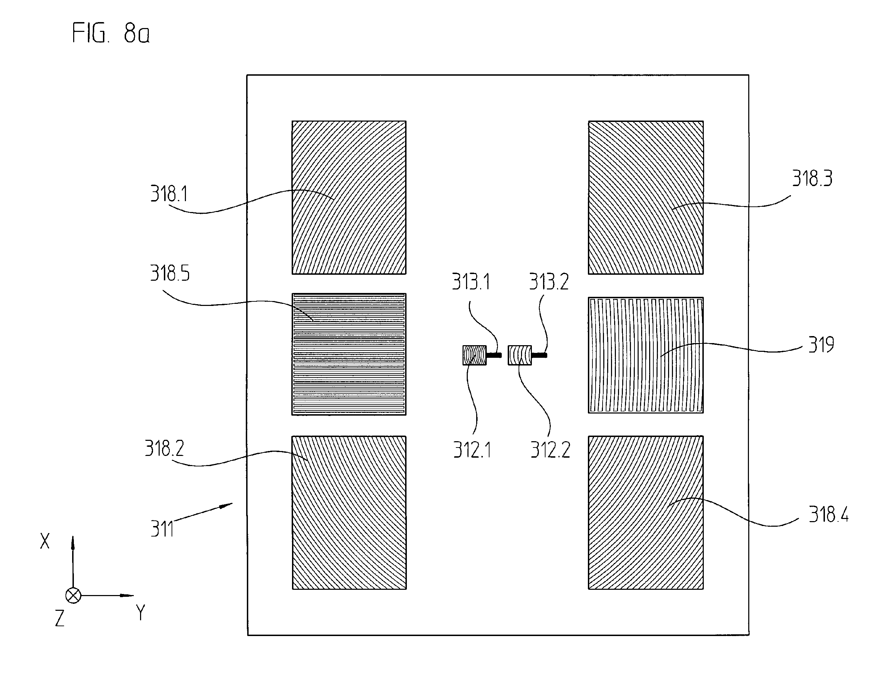

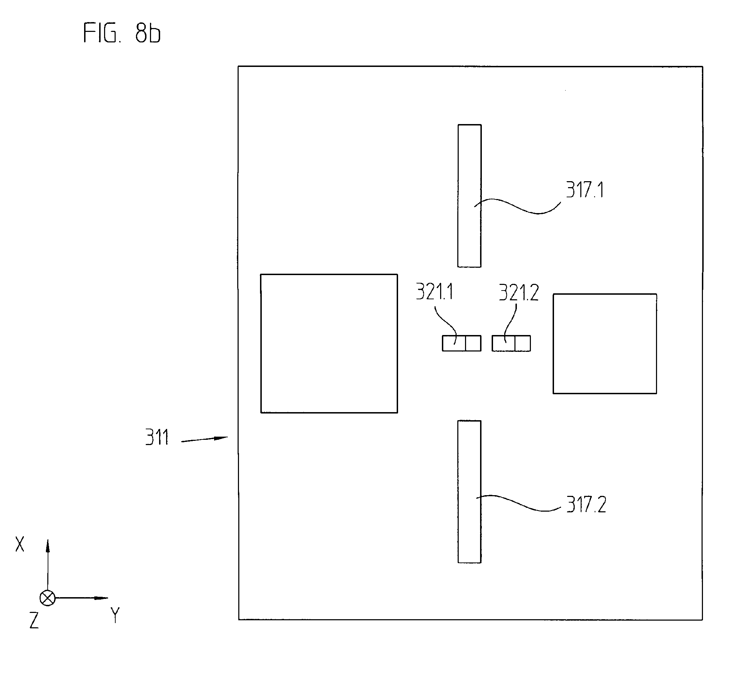

Anhand der Figuren 7a, 7b sowie 8a und 8b sei nachfolgend eine Variante der ersten erfindungsgemäßen Positionsmesseinrichtung erläutert, die sich geringfügig vom oben beschriebenen Beispiel unterscheidet. Die Fig. 7a und 7b zeigen analog zum vorherigen Beispiel wiederum Teil-Abtaststrahlengänge dieser Variante der ersten erfindungsgemäßen Positionsmesseinrichtung, in den Figuren 8a und 8b sind Ansichten der Unter- und Oberseite der Abtastplatte gezeigt. I.w. werden nachfolgend lediglich die Komponenten bzw. die Funktion derselben erläutert, die sich vom obigen Beispiel unterscheiden.

In den Figuren repräsentieren die durchgezogenen Teil-Abtaststrahlengänge diejenigen -Strahlengänge, die zur Erzeugung der Referenzimpulssignale dienen, die strichliniert dargestellten Teil-Abtaststrahlengänge repräsentieren die -Strahlengänge zur Inkrementalsignalerzeugung.

Im Unterschied zum ersten Beispiel ist zum einen konvergente Beleuchtung der Referenzmarkierung 331 auf der Reflexions-Maßverkörperung 330 vorgesehen. Es hat sich gezeigt, dass eine konvergente Beleuchtung der Referenzmarkierung 331 dahingehend Vorteile bietet, dass dann die Lage des neutralen Drehpunkts der Referenzimpulssignalerzeugung weitgehend unabhängig vom Abtastabstand zwischen der Reflexions-Maßverkörperung 330 und der Abtasteinheit 310 ist. In Figur 7b ist der konvergente Beleuchtungsstrahlengang zwischen dem Aufspaltgitter 319 und der Referenzmarkierung 331 angedeutet. Die Unabhängigkeit der Lage des neutralen Drehpunkts der Inkrementalsignalerzeugung vom Abtastabstand ist durch die gewählte Abtastung der Inkrementalteilungen 333.1, 333.2 zudem gewährleistet.

Um eine derartige konvergente Beleuchtung der Referenzmarkierung 331 zu gewährleisten wird in der dargestellten Variante der ersten erfindungsgemäßen Positionsmesseinrichtung das Aufspaltgitter 319 in der Abtasteinheit 310 als abbildende Linse in Form eines diffraktives Strahlteilerelements mit gekrümmten Gitterlinien ausgebildet, wie dies auch in der Ansicht der Unterseite der Abtastplatte 311 in Fig. 8a angedeutet ist.

Die Ausbildung des Aufspaltgitters 319 als abbildende Linse hat in dieser Variante der ersten erfindungsgemäßen Positionsmesseinrichtung eine weitere Modifikation im Abtaststrahlengang zur Folge. So ist es wichtig, dass das Aufspaltgitter 319 und die Blendenstrukturen 313.1, 313.2 auf der Abtastplatte 311 präzise zueinander ausgerichtet sind, damit die resultierenden Referenzimpulssignale auch bei einer Änderung des Abtastabstands lagemäßig unverändert bleiben. Um die präzise Ausrichtung dieser Komponenten technologisch bei der Herstellung einfacher realisieren zu können, ist bei dieser Variante vorgesehen, dass die Blendenstrukturen 313.1, 313.2 und das Aufspaltgitter 319 im Unterschied zum obigen Beispiel auf der gleichen Seite der Abtastplatte 311 angeordnet werden. Fig. 8a zeigt die Unterseite der Abtastplatte 311, wo in y-Richtung benachbart zu den Komponenten der Abbildungsoptik 312.1, 312.2 jeweils Blendenstrukturen 313.1, 313.2 angeordnet sind.

Alternativ hierzu wäre es im übrigen auch möglich, die Blendenstrukturen und das Aufspaltgitter auf der Oberseite der Abtastplatte anzubringen.

Um die Blendenstrukturen 313.1, 313.2 in der vorliegenden Variante auf der Unterseite der Abtastplatte 311 anordnen zu können, sind im Abtaststrahlengang im Unterschied zum vorherigen Beispiel ferner Reflektorelemente 321.1, 321.2 auf der Oberseite der Abtastplatte 311 angeordnet, wie dies etwa in Figur 8b dargestellt ist. Im Hinblick auf den Abtaststrahlengang hat dies zur Folge, dass - wie in Fig. 7b ersichtlich - die von der Referenzmarkierung 331 in Richtung Abtasteinheit 310 reflektierten Teilstrahlenbündel zunächst von der - in diesem Beispiel zweiteiligen - Abbildungsoptik 312.1, 312.2 über die zusätzlichen Reflektorelemente 321.1, 321.2 in die Ebene der Blendenstrukturen 313.1, 313.2 auf der Unterseite der Abtastplatte 311 abgebildet werden. In der Ansicht der Oberseite der Abtastplatte 311 in Fig. 8b sind die Reflektorelemente 321.1, 321.2 erkennbar. Von den Blendenstrukturen 313.1, 313.2 auf der Unterseite der Abtastplatte 311 erfolgt dann die Rückreflexion in Richtung der Detektorelemente 315.1, 315.2 zur Referenzimpulssignalerzeugung. Aufgrund dieses Strahlengangs sind die Blendenstrukturen 313.1, 313.2 in dieser Variante natürlich nicht als lichtdurchlässig/lichtundurchlässig ausgebildete Strukturen ausgebildet, sondern als reflektierend/nichtreflektierende Strukturen .

Der im Vergleich zum obigen Beispiel geringfügig modifizierte Abtaststrahlengang zur Erzeugung von Referenzimpulssignalen bedingt schließlich noch eine weitere Modifikation. So ist wie aus Fig. 7b ersichtlich nötig, dass über die Abbildungsoptik 312.1 bzw. 312.2 neben der abbildenden optischen Wirkung jeweils noch eine transversale Ablenkwirkung in y-Richtung erfolgt. Dies kann gewährleistet werden, wenn die Abbildungsoptik 312.1, 312.2 jeweils als Gitter-Linse-Struktur ausgebildet wird, wie dies schematisiert in der Ansicht der Unterseite der Abtastplatte 311 in Fig. 8a angedeutet ist.

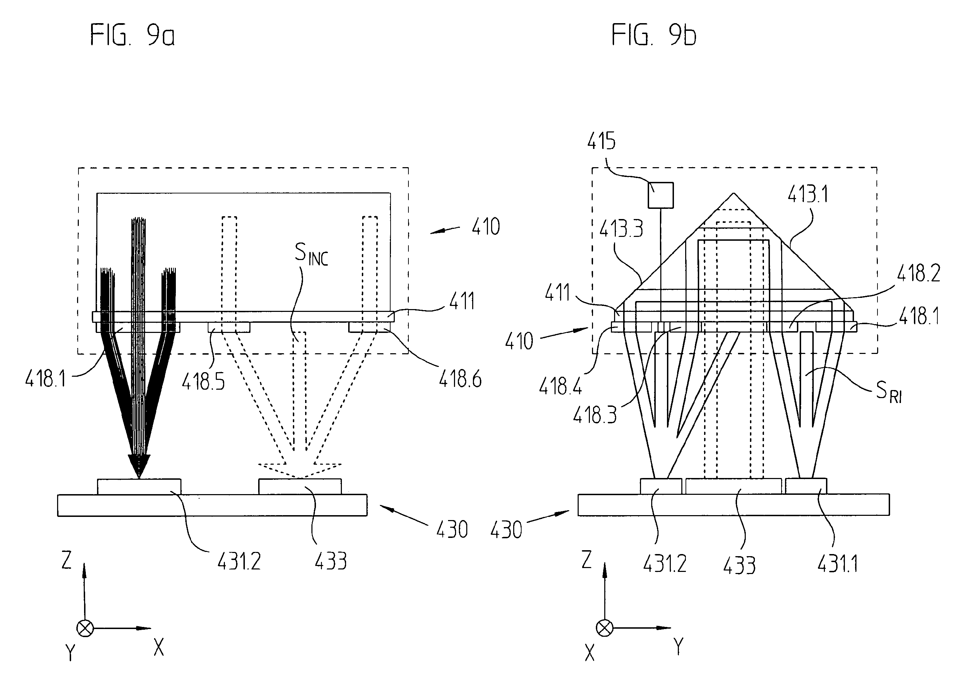

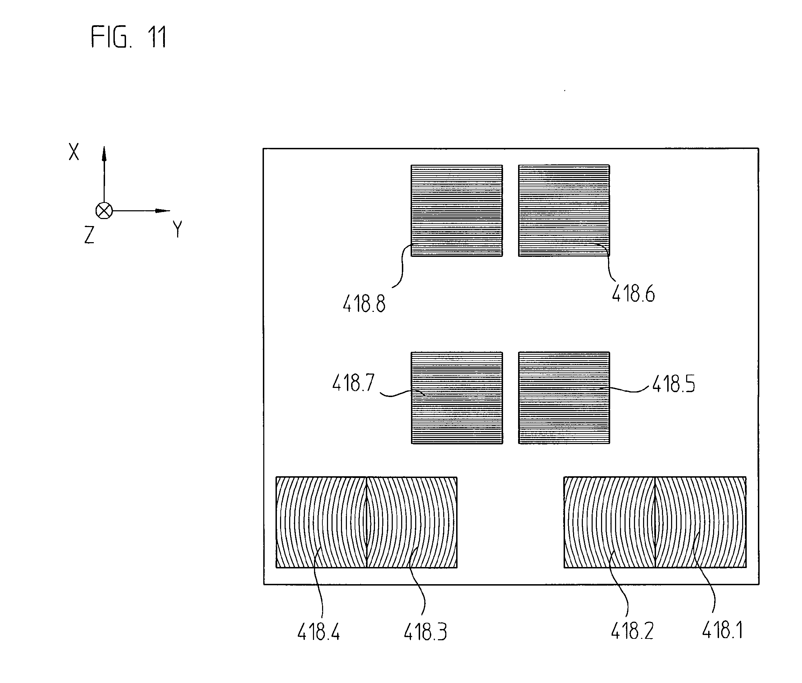

Abgesehen von den erläuterten Modifikationen funktioniert in dieser Variante der ersten erfindungsgemäßen Positionsmesseinrichtung die Erzeugung der Referenzimpuls- und Inkrementalsignale wie im vorab erläuterten Beispiel. Anhand der Fig. 9a, 9b, 10 und 11 sei abschließend eine zweite Positionsmesseinrichtung erläutert.

Die Fig. 9a und 9b zeigen in stark schematisierter Form wieder Teil-Abtaststrahlengänge zur Erzeugung der Inkrementalsignale und des Referenzimpulssignals in der zweiten Positionsmesseinrichtung in verschiedenen Ansichten.

In den Fig. 9a und 9b sind die Teil-Abtaststrahlengänge zur Referenzimpulssignalerzeugung jeweils durchgezogen dargestellt, die Teil-Abtaststrahlengänge zur Erzeugung der Inkrementalsignale hingegen jeweils strichliniert. Die zweite Positionsmesseinrichtung umfasst wiederum eine Abtasteinheit 410, die gegenüber einer Maßverkörperung, ausgebildet als Reflexions-Maßverkörperung 430, zumindest in der Messrichtung x beweglich angeordnet ist.

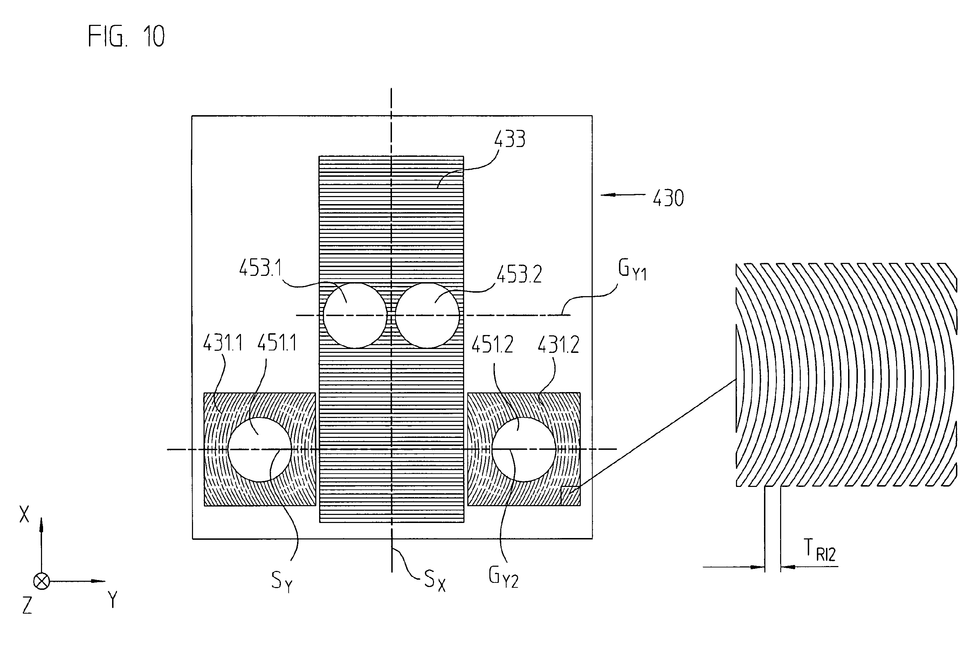

Die Reflexions-Maßverkörperung 430 besitzt im Unterschied zur obigen ersten erfindungsgemäßen Positionsmesseinrichtung nunmehr zwei sich parallel in Messrichtung x erstreckende Referenzmarkierungsspuren, die jeweils an mindestens einer Referenzposition $x_{REF}$ eine Referenzmarkierung 431.1, 431.2 aufweisen. Die Referenzmarkierungen 431.1, 431.2 sind hierbei symmetrisch bzgl. der in Fig. 10 erkennbaren Symmetrieachse $S_x$ ausgebildet, die sich entlang der Messrichtung x erstreckt. Zwischen den Referenzmarkierungsspuren ist eine Inkrementalteilungsspur mit einer periodischen Inkrementalteilung 433 angeordnet.

Die Abtasteinheit 410 umfasst erste Abtastmittel zur Erzeugung eines Referenzimpulssignals RI an der Referenzposition $x_{REF}$. Über die ersten Abtastmittel bzw. den entsprechenden Abtaststrahlengang wird sichergestellt, dass zur Erzeugung des Referenzimpulssignals RI die Referenzmarkierungen 431.1, 431.2 in den Referenzmarkierungsspuren vom Abtast-Strahlenbündel jeweils mindestens einmal in einem Referenzimpuls-Abtastfeld 451.1, 451.2 beaufschlagt werden. In Fig. 10 sind die entsprechenden Referenzimpuls-Abtastfelder 451.1, 451.2 in den Referenzmarkierungsspuren eingezeichnet.

Ferner sind zweite Abtastmittel auf Seiten der Abtasteinheit 410 vorgesehen, die zur Erzeugung der periodischen Inkrementalsignale $INC_A$, $INC_B$ dienen. Die zweiten Abtastmittel gewährleisten durch einen entsprechenden Abtaststrahlengang, dass zur Erzeugung der Inkrementalsignale $INC_A$, $INC_B$ die Inkrementalteilung 433 in zwei Inkrementalsignal-Abtastfeldern 453.1, 453.2 jeweils mindestens einmal beaufschlagt wird, wie dies ebenfalls in Figur 10 ersichtlich ist.

Die beidseitig benachbart zur Inkrementalteilung 433 angeordneten Referenzmarkierungen 431.1, 431.2 sind jeweils als Zylinderlinsen ausgebildet, die wie bereits oben erwähnt spiegelsymmetrisch zu einer Symmetrieachse $S_x$ ausgebildet sind. Die Symmetrieachse $S_x$ erstreckt sich parallel zur Messrichtung x in der Maßverkörperungsebene. Ferner erweist sich als vorteilhaft, wenn die Referenzmarkierungen 431.1, 431.2 auch spiegelsymmetrisch zu einer weiteren Symmetrieachse Sy ausgebildet werden, die sich senkrecht zur Messrichtung x in der Maßverkörperungsebene erstreckt.

Zunächst sei nunmehr die Erzeugung des Referenzimpulssignals RI und der mittels der ersten Abtastmittel realisierte Abtaststrahlengang in der zweiten Positionsmesseinrichtung erläutert; dieser ist in den Figuren 9a, 9b durchgezogen dargestellt.

So gelangt das von einer - nicht dargestellten - Lichtquelle emittierte, kollimierte Strahlenbündel $S_{RI}$ zunächst auf die erste Referenzmarkierung 431.2 auf der Reflexions-Maßverkörperung 430. Dort erfolgt eine Beugung des einfallenden Strahlenbündels und eine Aufspaltung in reflektierte +/- 1. Beugungsordnungen, die in Richtung Abtasteinheit 410 propagieren. Um eine hinreichende räumliche Trennung der zurückreflektierten, gebeugten Teilstrahlenbündel vom einfallenden Strahlenbündel bzw. eine hinreichende Aufspaltung in der x-z-Ebene derselben zu erreichen, weist die als Zylinderlinse ausgebildete Referenzmarkierung 431.1 eine Transversalperiodizität $T_{RI1}$ auf.

Die zur Abtasteinheit 410 zurückreflektierten, divergierenden Teilstrahlenbündel gelangen in der Abtasteinheit 410 jeweils auf diffraktive Abtastgitter 418.1, 418.2, die auf der Unterseite einer Abtastplatte 411 angeordnet sind. Die Abtastgitter 418.1, 418.2 kollimieren die einfallenden Teilstrahlenbündel wieder und lenken diese bzgl. der Abtastplattenebene so um, dass die optischen Achsen der Teilstrahlenbündel nach Durchtritt durch die Abtastplatte 411 senkrecht zur Abtastplattenebene orientiert sind. Anschließend gelangen die Teilstrahlenbündel auf verspiegelte Flächen eines nachgeordneten Dachkantprismas, die als Reflektorelemente 413.1, 413.2 fungieren und die Teilstrahlenbündel in Richtung zweier weiterer diffraktiver Abtastgitter 418.3, 418.4 umlenken, die ebenfalls auf der Unterseite der Abtastplatte 411 angeordnet sind. Über die beiden Abtastgitter 418.3, 418.4 werden die beiden Teilstrahlenbündel wieder dergestalt abgelenkt, dass sie konvergierend in Richtung der zweiten Referenzmarkierung 431.2 auf der Maßverkörperung 430 propagieren. Im Bereich der zweiten Referenzmarkierung 431.2, ausgebildet als Zylinderlinse mit der Transversalperiodizität $T_{RI2}$, interferieren die Teilstrahlenbündel und werden von dort wieder zurück in Richtung der Abtasteinheit 410 reflektiert, wo sie auf mehrere Referenzimpuls-Detektorelemente gelangen, von denen in der Figur lediglich das Referenzimpuls-Detektorelement 415 erkennbar ist. Im Fall des Überfahrens der Referenzmarkierungen 431.1, 431.2 resultiert an den Referenzimpuls-Detektorelementen 415 ein Referenzimpulssignal RI.

Zu den oben erwähnten ersten Abtastmitteln zur Erzeugung des Referenzimpulssignals RI gehören in dieser Positionsmesseinrichtung wiederum verschiedene optische Elemente in der Abtasteinheit 410 bzw. der Abtasteinheit 410 zugeordnete Elemente. Hierzu wären etwa die Abtastgitter 418.1 - 418.4 sowie die Reflektorelemente 413.1, 413.2 als auch die Referenzimpulssignal-Detektorelemente 415 zu zählen.

Nachfolgend sei nunmehr die Erzeugung der Inkrementalsignale $INC_A$, $INC_B$ anhand der Figuren 9a, 9b, 10 und 11 erläutert, welche in der zweiten Positionsmesseinrichtung mittels der zweiten Abtastmittel erzeugt werden. Der entsprechende Abtaststrahlengang ist in den Figuren 9a, 9b strichliniert dargestellt.

Das von einer - wiederum nicht dargestellten - Lichtquelle emittierte, kollimierte Strahlenbündel $S_{INC}$ gelangt in einem ersten Inkrementalsignal-Abtastfeld 453.1 ein erstes Mal auf die Inkrementalteilung 453 der Reflexions-Maßverkörperung 430. An dieser Stelle sei erwähnt, dass vorzugsweise eine einzige gemeinsame Lichtquelle verwendet wird, die die ersten und zweiten Abtastmittel mit Licht zur Abtastung der Inkrementalteilung 433 und der Referenzmarkierungen 431.1, 431.2 versorgt; grundsätzlich wäre natürlich auch die Verwendung zweier separater Lichtquellen möglich. Im ersten Inkrementalsignal-Abtastfeld 453.1 erfolgt eine Beugung des einfallenden Strahlenbündels und eine Aufspaltung in reflektierte +/- 1. Beugungsordnungen, die in Richtung Abtasteinheit 410 propagieren. Beim Durchtritt durch die Abtastgitter 418.5, 418.5 auf der Unterseite der Abtastplatte 411 erfahren die Teilstrahlenbündel wiederum eine Ablenkung dergestalt, dass sie anschließend senkrecht zur Abtastplattenebene weiter in Richtung der verspiegelte Flächen des nachgeordneten Dachkantprismas propagieren, die als Reflektorelemente 413.1, 413.2 fungieren. Von den Reflektorelementen 413.1, 413.2 werden die Teilstrahlenbündel wieder in Richtung zweier weiterer Abtastgitter 418.7, 418.8 zurückreflektiert, die ebenfalls wieder auf der Unterseite der Abtastplatte 411 angeordnet sind. Nach dem Durchtritt durch die Abtastgitter 418.7, 418.8 gelangen die Teilstrahlenbündel in einem zweiten Inkrementalsignal-Abtastfeld 453.2 ein zweites Mal auf die Inkrementalteilung 433, wo sie zur Interferenz kommen. Vom zweiten Inkrementalsignal-Abtastfeld 453.2 schließlich erfolgt eine - in den Figuren nicht mehr dargestellte - Rückreflexion mehrerer Teilstrahlenbündel in Richtung Abtasteinheit 410, wo diese auf die mehrere Inkrementalsignal-Detektorelemente gelangen.

An den Inkrementalsignal-Detektorelementen resultieren im Fall der Relativbewegung von Maßverkörperung und Abtasteinheit 410 periodische, phasenversetzte Inkrementalsignale, die dann in bekannter Art und Weise in ein Paar von Inkrementalsignalen $INC_A$, $INC_B$ mit 90° Phasenversatz umgewandelt werden können.

Als zweite Abtastmittel zur Erzeugung der Inkrementalsignale $INC_A$, $INC_B$ fungieren in der zweiten Positionsmessrichtung demzufolge wiederum verschiedene optische Elemente in der Abtasteinheit 410 bzw. der Abtasteinheit 410 zugeordnete Elemente. Hierzu gehören die Abtastgitter 418.5 - 418.8 sowie die Reflektorelemente 413.1, 413.2 als auch die Inkrementalsignal-Detektorelemente.

Über die zweiten Abtastmittel wird demzufolge sichergestellt, dass die mittig angeordnete Inkrementalteilung 433 von den zur Abtastung genutzten Strahlenbündeln in den beiden Inkrementalsignal-Abtastfeldern 453.1, 453.2 je einmal beaufschlagt wird.

Wie insbesondere aus der Darstellung in Figur 10 hervorgeht, liegen im dargestellten Beispiel die Zentren der beiden Inkrementalsignal-Abtastfelder 453.1, 453.2 auf einer ersten Geraden $G_{y1}$, die sich senkrecht zur Messrichtung x in der Maßverkörperungsebene erstreckt; die Zentren der beiden Referenzimpulssignal-Abtastfelder 451.1, 451.2 liegen auf einer zweiten Geraden $G_{y2}$, die sich ebenfalls senkrecht zur Messrichtung x in der Maßverkörperungsebene erstreckt und im dargestellten Ausführungsbeispiel mit der bereits erwähnten Symmetriegeraden $S_y$ zusammenfällt. Die beiden Geraden $G_{y1}$ und $G_{y2}$ sind in Messrichtung x versetzt zueinander angeordnet. Es ergibt sich aufgrund dieser versetzten Anordnung der Abtastfelder die bereits oben erwähnte Unterdrückung eines Signal-Übersprechens auf die Inkrementaltalspur sowie ein kompakter Aufbau.

## Patentansprüche

1. Positionsmesseinrichtung zur Erzeugung von Inkrementalsignalen ($INC_A$, $INC_B$) und einem Referenzimpulssignal (RI) an mindestens einer Referenzposition ($x_{REF}$), bestehend aus einer Abtasteinheit (10; 310) sowie einer hierzu in mindestens einer Messrichtung (x) beweglichen Maßverkörperung (30; 30'; 330),

   - wobei die Maßverkörperung (30; 330) zwei sich parallel in Messrichtung (x) erstreckende Inkrementalteilungsspuren mit periodischen Inkrementalteilungen (33.1, 33.2; 33.1', 33.2'; 333.1, 333.2) umfasst, zwischen denen eine Referenzmarkierungsspur angeordnet ist, die an mindestens einer Referenzposition ($x_{REF}$) eine Referenzmarkierung (31; 31'; 331) aufweist und
   - wobei die Abtasteinheit (10; 310)

      - erste Abtastmittel zur Erzeugung des Referenzimpulssignals (RI) umfasst und
      - zweite Abtastmittel zur Erzeugung der Inkrementalsignale ($INC_A$, $INC_B$) umfasst, wobei zur Erzeugung der Inkrementalsignale ($INC_A$, $INC_B$) jede der Inkrementalteilungen (33.1, 33.2; 33.1', 33.2'; 333.1, 333.2) von einem Abtast-Strahlenbündel mindestens einmal in einem Inkrementalsignal-Abtastfeld (53.1, 53.2; 53.1', 53.2') beaufschlagt wird und die zweiten Abtastmittel
      - mehrere optische Elemente umfassen, worunter mehrere Abtastgitter (18.1 - 18.4; 318.1 - 318.4), mindestens ein Vereinigungsgitter (18.5) sowie mindestens zwei Reflektorelemente (17.1, 17.2; 317 1, 317.2) sind, über die eine Rückreflexion der aus einem ersten InkrementalsignalAbtastfeld (53.1; 53.1') einer Inkrementalteilung (33.1; 33.1'; 333.1) kommenden Strahlenbündel in ein zweites Inkrementalsignal-Abtastfeld (53.2; 53.2') der anderen Inkrementalteilung (33.2; 33.2'; 333.2) erfolgt und

- mehrere Inkrementalsignal-Detektorelemente (20.1, 20.2, 20.3; 321.1, 321.2, 321.3) umfassen.

2. Positionsmesseinrichtung nach Anspruch 1, wobei über die ersten Abtastmittel in der Abtasteinheit (10; 310) zur Erzeugung des Referenzimpulssignals (RI) die Referenzmarkierung (31; 31'; 331) auf der Maßverkörperung (30; 30'; 330) einmal in einem Referenzimpuls-Abtastfeld (51; 51') beaufschlagt wird.

3. Positionsmesseinrichtung nach Anspruch 2, wobei die Zentren der beiden Inkrementalsignal-Abtastfelder (53.1, 53.2; 53.1', 53.2') und das Zentrum des Referenzimpuls-Abtastfelds (51; 51') auf einer Geraden (Gy) in der Maßverkörperungsebene liegen, die senkrecht zur Messrichtung (x) orientiert ist.

4. Positionsmesseinrichtung nach Anspruch 2, wobei die Zentren der beiden Inkrementalsignal-Abtastfelder (53.1', 53.2') auf einer Geraden (Gy) in der Maßverkörperungsebene liegen, die senkrecht zur Messrichtung (x) orientiert ist und das Zentrum des Referenzimpuls-Abtastfelds (51') in Messrichtung (x) versetzt zu dieser Geraden (Gy) auf der Maßverkörperung (30') angeordnet ist.

5. Positionsmesseinrichtung nach mindestens einem der vorangehenden Ansprüche, wobei die Referenzmarkierung (31) an der Referenzposition ($x_{REF}$)

- mindestens einen Satz erster Strukturelemente (31.1) aufweist, die in der Ebene der Maßverkörperung (30) senkrecht zur Messrichtung (x) periodisch mit einer ersten Transversalperiodizität (T1) angeordnet sind und
- mindestens einen Satz zweiter Strukturelemente (31.2) aufweist, die in der Ebene der Maßverkörperung (30) senkrecht zur Messrichtung (x) periodisch mit einer zweiten Transversalperiodizität (T2) angeordnet sind, wobei sich die erste und die zweite Transversalperiodizität (T1, T2) voneinander unterscheiden und
- die Strukturelemente (31.1, 31.2) als diffraktive Strukturelemente ausgebildet sind, die in der Messrichtung (x) optisch wie eine Zylinderlinse mit einer bestimmten Brennweite (f) wirken und senkrecht zur Messrichtung (x) wie ein Ablenkgitter mit der ersten oder zweiten Transversalperiodizität (T1, T2) wirken und
- wobei die Strukturelemente (31.1, 31.2) in Messrichtung (x) einen virtuellen oder reellen Brennpunkt im Brennweiten-Abstand f von der Reflexions-Maßverkörperung (30) besitzen.

6. Positionsmesseinrichtung nach Anspruch 5, wobei die ersten Abtastmittel in der Abtasteinheit (10; 310) zur Erzeugung des Referenzimpulssignals (RI)

- mehrere optische Elemente umfassen, worunter mindestens eine Abbildungsoptik (12), sowie mindestens zwei in einer Blendenebene angeordnete Blendenstrukturen (13.1, 13.2) mit jeweils mehreren Blendenöffnungen sind sowie
- mindestens zwei Referenzimpuls-Detektorelemente (15.2) umfassen.

7. Positionsmesseinrichtung nach Anspruch 6, wobei die Abbildungsoptik (12) in der Abtasteinheit (10) derart dimensioniert ist, dass darüber eine Abbildung der bildseitigen Brennebene der Strukturelemente (31.1, 31.2) in die Blendenebene resultiert und wobei die positionsmäßige Anordnung der Blendenöffnungen der beiden Blendenstrukturen (13.1, 13.2) in Messrichtung (x) auf die Anordnung der Strukturelemente (31.1, 31.2) der Referenzmarkierung (31) abgestimmt ist.

8. Positionsmesseinrichtung nach Anspruch 7, wobei die Abtasteinheit (10) eine Abtastplatte (11) umfasst, auf der die Blendenstrukturen (13.1, 13.2) und die Abbildungsoptik (12) angeordnet ist.

9. Positionsmesseinrichtung nach Anspruch 1, wobei die Abtasteinheit (10; 310) eine Abtastplatte (11; 311) umfasst, auf der die Abtastgitter (18.1 - 18.4; 318.1 - 318.4), das Vereinigungsgitter (18.5) sowie die Reflektorelemente (17.1, 17.2; 317.1, 317.2) angeordnet sind.

10. Positionsmesseinrichtung nach Anspruch 6, wobei

- der Abtasteinheit (10; 310) ferner eine Lichtquelle (14; 314) zugeordnet ist, die die ersten und zweiten Abtastmittel mit Licht zur Abtastung der Inkrementalteilungen (33.1, 33.2; 333.1, 333.2) und der Referenzmarkierung (31; 331) versorgt und
- die Abtasteinheit (10; 310) ferner ein Aufspaltgitter (19; 319) umfasst, welches das von der Lichtquelle (14; 314) kommende Strahlenbündel in ein erstes Teilstrahlenbündel für die ersten Abtastmittel zur Referenzimpulssignalerzeugung und ein zweites Teilstrahlenbündel für die zweiten Abtastmittel zur Inkrementalsignalerzeugung aufspaltet.

**11.** Positionsmesseinrichtung nach Anspruch 10, wobei das Aufspaltgitter (319) derart ausgebildet ist, dass eine konvergente Beleuchtung der Referenzmarkierung (331) auf der Reflexions-Maßverkörperung (330) resultiert.

**12.** Positionsmesseinrichtung nach Anspruch 8, 9 und 10, wobei das Aufspaltgitter (19; 319) auf der Seite der Abtastplatte (11; 311) angeordnet ist, die der Maßverkörperung (30; 330) zugewandt ist.

**Claims**

**1.** Position measuring device for generating incremental signals ($INC_A$, $INC_B$) and a reference pulse signal (RI) at at least one reference position ($x_{REF}$), consisting of a scanning unit (10; 310) and a material measure (30; 30'; 330) moveable with respect thereto in at least one measurement direction (x),

- wherein the material measure (30; 330) comprises two incremental graduation tracks extending parallel in the measurement direction (x) and having periodic incremental graduations (33.1, 33.2; 33.1', 33.2'; 333.1, 333.2), between which a reference marking track is arranged, which has a reference marking (31; 31'; 331) at at least one reference position ($x_{REF}$), and
- wherein the scanning unit (10; 310)

- comprises first scanning means for generating the reference pulse signal (RI) and
- comprises second scanning means for generating the incremental signals ($INC_A$, $INC_B$), wherein for generating the incremental signals ($INC_A$, $INC_B$) each of the incremental graduations (33.1, 33.2; 33.1', 33.2'; 333.1, 333.2) is impinged on by a scanning beam at least once in an incremental signal scanning field (53.1, 53.2; 53.1', 53.2'), and the second scanning means
- comprise a plurality of optical elements, which include a plurality of scanning gratings (18.1 - 18.4; 318.1 - 318.4), at least one combining grating (18.5) and at least two reflector elements (17.1, 17.2; 317.1, 317.2), via which the beams coming from a first incremental signal scanning field (53.1; 53.1') of one incremental graduation (33.1; 33.1'; 333.1) are reflected back into a second incremental signal scanning field (53.2; 53.2') of the other incremental graduation (33.2; 33.2'; 333.2), and

- comprise a plurality of incremental signal detector elements (20.1, 20.2, 20.3; 321.1, 321.2, 321.3).

**2.** Position measuring device according to Claim 1, wherein via the first scanning means in the scanning unit (10; 310) for generating the reference pulse signal (RI) the reference marking (31; 31'; 331) on the material measure (30; 30'; 330) is impinged on once in a reference pulse scanning field (51; 51').

**3.** Position measuring device according to Claim 2, wherein the centres of the two incremental signal scanning fields (53.1, 53.2; 53.1', 53.2') and the centre of the reference pulse scanning field (51; 51') lie on a straight line (Gy) in the material measure plane which is oriented perpendicularly to the measurement direction (x).

**4.** Position measuring device according to Claim 2, wherein the centres of the two incremental signal scanning fields (53.1', 53.2') lie on a straight line (Gy) in the material measure plane which is oriented perpendicularly to the measurement direction (x), and the centre of the reference pulse scanning field (51') is arranged in a manner offset in the measurement direction (x) with respect to said straight line (Gy) on the material measure (30').

**5.** Position measuring device according to at least one of the preceding claims, wherein the reference marking (31) at the reference position ($x_{REF}$)

- has at least one set of first structure elements (31.1) which are arranged in the plane of the material measure (30) perpendicularly to the measurement direction (x) periodically with a first transversal periodicity (T1), and
- has at least one set of second structure elements (31.2) which are arranged in the plane of the material measure (30) perpendicularly to the measurement direction (x) periodically with a second transversal periodicity (T2), wherein the first and second transversal periodicities (T1, T2) differ from one another, and
- the structure elements (31.1, 31.2) are embodied as diffractive structure elements which in the measurement direction (x) act optically like a cylindrical lens having a specific focal length (f) and perpendicularly to the measurement direction (x) act like a deflection grating having the first or second transversale periodicity (T1, T2), and

- wherein the structure elements (31.1, 31.2) have in the measurement direction (x) a virtual or real focal point at the focal length distance (f) from the reflection material measure (30).

6. Position measuring device according to Claim 5, wherein the first scanning means in the scanning unit (10; 310) for generating the reference pulse signal (RI)

- comprise a plurality of optical elements, which include at least one imaging optic (12) and at least two diaphragm structures (13.1, 13.2) arranged in a diaphragm plane and each having a plurality of diaphragm apertures, and
- comprise at least two reference pulse detector elements (15.2).

7. Position measuring device according to Claim 6, wherein the imaging optic (12) in the scanning unit (10) is dimensioned in such a way that it results in an imaging of the image-side focal plane of the structure elements (31.1, 31.2) into the diaphragm plane, and wherein the positional arrangement of the diaphragm apertures of the two diaphragm structures (13.1, 13.2) in the measurement direction (x) is coordinated with the arrangement of the structure elements (31.1, 31.2) of the reference marking (31).

8. Position measuring device according to Claim 7, wherein the scanning unit (10) comprises a scanning plate (11), on which the diaphragm structures (13.1, 13.2) and the imaging optic (12) are arranged.

9. Position measuring device according to Claim 1, wherein the scanning unit (10; 310) comprises a scanning plate (11; 311), on which the scanning gratings (18.1 - 18.4; 318.1 - 318.4), the combining grating (18.5) and the reflector elements (17.1, 17.2; 317.1, 317.2) are arranged.

10. Position measuring device according to Claim 6, wherein

- the scanning unit (10; 310) is furthermore assigned a light source (14; 314), which supplies the first and second scanning means with light for scanning the incremental graduations (33.1, 33.2; 333.1, 333.2) and the reference marking (31; 331), and
- the scanning unit (10; 310) furthermore comprises a splitting grating (19; 319), which splits the beam coming from the light source (14; 314) into a first partial beam for the first scanning means for reference pulse signal generation and a second partial beam for the second scanning means for incremental signal generation.

11. Position measuring device according to Claim 10, wherein the splitting grating (319) is embodied in such a way as to result in a convergent illumination of the reference marking (331) on the reflection material measure (330).

12. Position measuring device according to Claims 8, 9 and 10, wherein the splitting grating (19; 319) is arranged on the side of the scanning plate (11; 311) which faces the material measure (30; 330).

**Revendications**

1. Dispositif de mesure de position destiné à générer des signaux incrémentaux ($INC_A$, $INC_B$) et un signal impulsionnel de référence (RI) au niveau d'au moins une position de référence ($x_{REF}$), constitué d'une unité de balayage (10 ; 310) ainsi que d'un étalon (30 ; 30' ; 33C) qui, à cet effet, est mobile dans au moins une direction de mesure (x),

- l'étalon (30 ; 330) comprenant deux pistes de divisions incrémentales qui s'étendent en parallèle dans la direction de mesure (x) et munies de divisions incrémentales périodiques (33.1, 33.2 ; 33.1', 33,2' ; 333.1, 333.2) entre lesquelles est disposée une piste de marquage de référence qui présente un marquage de référence (31 ; 31' ; 331) en au moins une position de référence ($x_{REF}$) et
- l'unité de balayage (10 ; 310)

- comprenant des premiers moyens de balayage destinés à générer le signal impulsionnel de référence (RI) et
- comprenant des deuxièmes moyens de balayage destinés à générer les signaux incrémentaux ($INC_A$, $INC_B$), chacune des divisions incrémentales (33.1, 33.2 ; 33.1', 33.2' ; 333.1, 333.2), en vue de générer les signaux incrémentaux ($INC_A$, $INC_B$), étant exposée à un faisceau de rayons de balayage au moins une fois dans un champ de balayage de signal incrémental (53.1, 53.2 ; 53.1', 53.2') et les deuxièmes moyens de balayage

- comprenant plusieurs éléments optiques, parmi lesquels se trouvent plusieurs grilles de balayage (18.1 - 18.4 ; 328.1 - 318.4), au moins une grille d'unification (18.5) ainsi qu'au moins deux éléments réflecteurs (17.1, 17.2 ; 317.1, 317.2), par le biais desquels est effectuée une rétroréflexion du faisceau de rayons en provenance d'un premier champ de balayage de signal incrémental (53.1 ; 53.1') d'une division incrémentale (33.1 ; 33.1' ; 333.1) dans un deuxième champ de balayage de signal incrémental (53.2 ; 53.2') de l'autre division incrémentale (33.2 ; 33.2' ; 333.2) et

- comprenant plusieurs éléments détecteurs de signal incremental (20.1, 20.2, 20.3 ; 321.1, 321.2, 321.3).

2. Dispositif de mesure de position selon la revendication 1, avec lequel, en vue de générer le signal impulsionnel de référence (RI), le marquage de référence (31 ; 31' ; 331) sur l'étalon (30 ; 30' ; 330) est exposé une fois dans un champ de balayage d'impulsion de référence (51 ; 51') par le biais des premiers moyens de balayage dans l'unité de balayage (10 ; 310).

3. Dispositif de mesure de position selon la revendication 2, avec lequel les centres des deux champs de balayage de signal incrémental (53.1, 53.2 ; 53.1', 53.2') et le centre du champ de balayage d'impulsion de référence (51 ; 51') se trouvent sur une droite (Gy) dans le plan de l'étalon, laquelle est orientée perpendiculairement à la direction de mesure (x).

4. Dispositif de mesure de position selon la revendication 2, avec lequel les centres des deux champs de balayage de signal incrémental (53.1', 53.2') se trouvent sur une droite (Gy) dans le plan de l'étalon qui est orientée perpendiculairement à la direction de mesure (x) et le centre du champ de balayage d'impulsion de référence (51') est disposé sur l'étalon (30') décalé dans la direction de mesure (x) par rapport à cette droite (Gy).

5. Dispositif de mesure de position selon au moins l'une des revendications précédentes, avec lequel le marquage de référence (31) au niveau de la position de référence ($x_{REF}$)

- présente au moins un jeu de premiers éléments structurels (31.1) qui sont disposés dans le plan de l'étalon (30) perpendiculairement à la direction de mesure (x), périodiquement avec une première périodicité transversale (T1) et

- présente au moins un jeu de deuxièmes éléments structurels (31.2) qui sont disposés dans le plan de l'étalon (30) perpendiculairement à la direction de mesure (x), périodiquement avec une deuxième périodicité transversale (T2), les première et deuxième périodicités transversales (T1, T2) étant différentes l'une de l'autre et

- les éléments structurels (31.1, 31.2) étant réalisés sous la forme d'éléments structurels diffractifs qui, dans la direction de mesure (x), agissent optiquement comme une lentille cylindrique ayant une distance focale (f) donnée et, perpendiculairement à la direction de mesure (x), agissent comme une grille de déviation avec la première ou la deuxième périodicité transversale (T1, T2) et

- les éléments structurels (31.1, 31.2) possédant dans la direction de mesure (x) un foyer virtuel ou réel à la distance focale f de l'étalon de réflexion (30).

6. Dispositif de mesure de position selon la revendication 5, avec lequel les premiers moyens de balayage dans l'unité de balayage (10 ; 310), en vue de générer le signal impulsionnel de référence (RI),

- comprennent plusieurs éléments optiques, parmi lesquels se trouvent au moins une optique de représentation (12) ainsi qu'au moins deux structures de diaphragme (13.1, 13.2) disposées dans un plan de diaphragme et respectivement munies de plusieurs ouvertures de diaphragme, et aussi

- comprennent au moins deux éléments détecteurs d'impulsion de référence (15.2).

7. Dispositif de mesure de position selon la revendication 6, avec lequel l'optique de représentation (12) dans l'unité de balayage (10) est dimensionnée de telle sorte qu'il en résulte sur celle-ci une représentation du plan focal côté image des éléments structurels (31.1, 31.2) dans le plan de diaphragme et l'arrangement positionnel des ouvertures de diaphragme des deux structures de diaphragme (13.1, 13.2) dans la direction de mesure (x) étant accordé sur l'arrangement des éléments structurels (31.1, 31.2) du marquage de référence (31).

8. Dispositif de mesure de position selon la revendication 7, avec lequel l'unité de balayage (10) comprend une plaque de balayage (11) sur laquelle sont disposées les structures de diaphragme (13.1, 13.2) et l'optique de représentation (12).

**9.** Dispositif de mesure de position selon la revendication 1, avec lequel l'unité de balayage (10 ; 310) comprend une plaque de balayage (11 ; 311) sur laquelle sont disposés les grilles de balayage (18.1 - 18.4 ; 318.1 - 318.4), la grille d'unification (18.5) ainsi que les éléments réflecteurs (17.1, 17.2 ; 317.1, 317.2).

**10.** Dispositif de mesure de position selon la revendication 6, avec lequel

- une source de lumière (14 ; 314) est en outre associée à l'unité de balayage (10 ; 310), laquelle alimente les premiers et deuxièmes moyens de balayage en lumière en vue du balayage des divisions incrémentales (33.1, 33.2 ; 333.1, 333.2) et du marquage de référence (31 ; 331) et
- l'unité de balayage (10 ; 310) comprend en outre une grille de dédoublement (19 ; 319) qui dédouble le faisceau de rayons en provenance de la source de lumière (14 ; 314) en un premier faisceau de rayons partiel pour les premiers moyens de balayage destinés à générer le signal impulsionnel de référence et en un deuxième faisceau de rayons partiel pour les deuxièmes moyens de balayage destinés à générer les signaux incrémentaux.

**11.** Dispositif de mesure de position selon la revendication 10, avec lequel la grille de dédoublement (319) est configurée de telle sorte qu'il en résulte un éclairage convergent du marquage de référence (331) sur l'étalon de déflexion (330).

**12.** Dispositif de mesure de position selon les revendications 8, 9 et 10, avec lequel la grille de dédoublement (19 ; 319) est disposée sur le coté de la plaque de balayage (11 ; 311) qui fait face à l'étalon (30 ; 330).

FIG. 1a

EP 1 923 673 B1

FIG. 1b

EP 1 923 673 B1

FIG. 1c

FIG. 2a

FIG. 2b

FIG. 2c

30'

33.2'

33.1'

53.2'

53.1'

51'

31'

X_REF

G_Y

X  Y  Z

FIG. 3a

EP 1 923 673 B1

FIG. 3b

17.1

13.1, 13.2

17.2

11

X
Z
Y

EP 1 923 673 B1

EP 1 923 673 B1

FIG. 4a

FIG. 4b

EP 1 923 673 B1

FIG. 4c

EP 1 923 673 B1

FIG. 5

FIG. 6a

FIG. 6b

EP 1 923 673 B1

FIG. 6c

FIG. 7a

EP 1 923 673 B1

FIG. 7b

EP 1 923 673 B1

FIG. 8a

FIG. 8b

317.1

321.2

321.1

317.2

311

X

Y

Z

FIG. 9b

FIG. 9a

FIG. 10

EP 1 923 673 B1

FIG. 11

**EP 1 923 673 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 194611 A2
- EP 303008 A2
- DE 19748802 A1

- DE 19921309 A1
- DE 4021010 A1
- DE 102006042743